(19) Europäisches Patentamt
European Patent Office
Office européen des brevets

(11) EP 3 180 990 A1

(12) **EUROPEAN PATENT APPLICATION**

(43) Date of publication:
**21.06.2017 Bulletin 2017/25**

(21) Application number: **15200509.6**

(22) Date of filing: **16.12.2015**

(51) Int Cl.:
*A23K 10/00* (2016.01) *A23K 10/12* (2016.01)
*A23K 50/00* (2016.01) *A23L 5/00* (2016.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Neste Oyj**
**02150 Espoo (FI)**

(72) Inventors:
- **PASANEN, Jukka-Pekka**
  **00910 Helsinki (FI)**
- **JÜRGENS, German**
  **00670 Helsinki (FI)**
- **APAJALAHTI, Juha**
  **00670 Helsinki (FI)**

(74) Representative: **TBK**
**Bavariaring 4-6**
**80336 München (DE)**

(54) **METHOD FOR PREPARING A COMPOSITION HAVING ANTIMICROBIAL ACTIVITY**

(57) The present invention relates to a method for preparing a composition having antimicrobial activity composition which is derived from spent fermentation broth, the composition having antimicrobial activity and the use of the composition as an antibiotic or as an additive for feed or food.

Fig. 46

FERMENTATION
OPTION A: BIOMASS NOT REMOVED BEFORE THERMAL PROCESSING
OPTION B: BIOMASS REMOVED BEFORE THERMAL PROCESSING
THERMAL PROCESSING
LIQUID
BIOMASS
THERMALLY PROCESSED BIOMASS
THERMAL PROCESSING
SOLUBLE MATERIAL THAT WAS SOLIDIFIED DURING THERMAL TREATMENT
THERMALLY PROCESSED LIQUID
THERMALLY PROCESSED LIQUID

EP 3 180 990 A1

## Description

### Field of the invention

The present invention relates to a method for preparing a composition having antimicrobial activity, the use of the composition as an antibiotic, an additive for feed or food comprising said composition and a feed or food comprising said composition.

### Background of the invention

The digestive tract of human and animals may be infected by many pathogens. In human beings this causes disorders in digestive tract or illnesses, while in animals this causes economic losses due to lowered productivity, illnesses or death. In addition, pathogens may cause food borne infections for consumers, if entered into the food chain. Many of the pathogens are part of the normal intestinal flora, and illness may be triggered, for example, by stress.

Pathogenic *Salmonella enterica* strains are a distressing health problem both with humans and animals worldwide. *S. enterica* serotype Choleraesuis shows the highest tendency to cause systemic infections. Emergence of *S. enterica* strains that are resistant to chloramphenicol and other antibiotics has aroused concern about the use of these agents for the treatment of systemic infection caused by *Salmonella. Salmonella enterica* is a facultatively anaerobic Gram-negative bacterium. *Escherichia coli* is also part of the normal microbiota of animal or humans. Some *E. coli* serotypes are harmful, e.g. *E. coli* F4+. *E. coli* are the major cause of weaning diarrhea in piglets. *Escherichia coli* is a Gram-negative bacterium. *Clostridium perfringens* is a wide-spread pathogen for poultry, causing detrimental necrotic enteritis. *Campylobacter jejuni* is perhaps the most serious foodborne pathogen detrimental to end consumers when reaching the food chain.

*Enterococci* belong to homofermentative lactic acid producers. Homolactic fermentation in the ileum usually correlates, e.g., with poor performance of broiler chickens. *Enterococci* are commonly considered as unwanted bacteria because they transfer horizontally antibiotic resistance genes more than other intestinal bacteria.

Further, *Lactobacillus reuteri* is regarded as being a more wanted lactobacilli than *Lactobacillus crispatus* because it is a heterofermentative lactic acid bacterium producing both lactic and acetic acids in equimolar ratio. *L. crispatus* is homofermentative and therefore produce only lactic acid. In latest studies high abundance of homofermentative lactobacilli reflects poor animal performance.

In-feed antibiotics, i.e., antibiotic agents suppressing microbial growth can be used in animal feeds to increase the productivity of production animals. The exact mechanism of this effect is not fully known, but it has been speculated that they reduce the amount of bacteria in small intestine. It has been estimated that 20 % of the surface of the small intestine is covered by bacteria, which are also able to use the nutrients found in the feed. Thus, by reducing their number, more nutrients are available for the animal. Another theory is that the use of antibiotics reduces the alertness level of the immune system, which normally uses up to 30 % of the total energy used by the animals.

In the European Union (EU) in-feed antibiotics were banned, while this ban is directed at animal products produced in EU and animal products imported into the EU. Similar trends are expected also in other countries due to consumer demand. Especially important for the present situation in the EU is the control of foodborne pathogens, like *Salmonella enterica* and *Campylobacter jejuni.* Future legislation has been proposed to set strict limits for their incidence. The key question is whether the minimum inhibitory concentration for the harmful and/or unwanted bacteria is lower than for beneficial intestinal bacteria. If the inhibitory concentration for beneficial bacteria is lower than for pathogens or unwanted pathogens, the product is not likely to be successful.

For this reason, alternatives to in-feed antibiotics are needed which are more specific for pathogenic and/or unwanted bacteria than for beneficial bacteria and the market potential is large since substances having antibiotic activity or their alternatives are used in nearly all animal feed.

Thermal processing of aqueous suspensions like cultures of microorganisms comprising a liquid phase and biomass (cells) can be used to enhance the feed additive properties of components of the aqueous suspensions either as a stand-alone process or combined to other processes like the production of microbial oil or ethanol.

US 2006/263415 A1 discloses a method for producing yeast β-glucan and mannan preparations, in which method yeast cells are autolysed at a temperature of 50-60 °C to release yeast cell walls, the cell walls subjected to enzymatic treatment after which a liquid glucan enriched fraction is separated from a solid mannan enriched fraction. The enzymatically treated cell wall composition can be used as such as animal feed as well as the glucan and mannan enriched fractions.

US 2005/020490 A1 discloses a method for producing yeast β-glucan and mannan preparations, wherein the separation of glucan enriched fraction from yeast cell walls is conducted by alkali-earth metal hydroxide treatment. The use of the produced β-glucan, mannan and mannoproteins in animal feed to replace the use of growth promoting antibiotics is discussed.

US 2012/121755 A1 discloses a method for producing a fermented liquid feed composition for a target animal, in which method a feed substrate is fermented with lactic acid producing bacteria, wherein the substrate is selected from the group of plants, plant materials, and organic residue.

WO 2011/143380 A1 discloses a method for recovering lipids from low cellulosic microorganism biomass, in which method the biomass is subjected to a hydrothermal treatment at a temperature of 170-225 °C after which aqueous liquid fraction is separated from the hydrothermally treated biomass by filtration, and lipids are recovered from the cell mass by solvent extraction. This document discloses as low cellulosic biomass microalga, cyanobacteria and fermentation residues such as distillers grains, which comprise non-living yeast cells.

**Summary of the invention**

One aim of the present invention is to provide a solution to the problems encountered in the prior art. Specifically, the present invention aims to provide a solution to problems connected with unwanted and/or pathogenic bacteria in the digestive tract of humans and animals, which is achieved by affecting the microbiota of the animal by the product from thermal processing. Furthermore, the present invention aims to increase the productivity of animals.

Surprisingly, it has been found that a composition obtained by thermal processing of a spent fermentation broth originating from cultures of microorganisms can work as replacer of in-feed antibiotics. Furthermore, said composition inhibits the growth of the unwanted and/or pathogenic bacteria more effectively than the growth of commensal and wanted bacteria and can modulate the microbiota of the small intestine towards the wanted heterofermentative lactic acid bacteria.

That is, in the present invention, a composition obtained from the hydrothermal treatment (HTT) of a spent fermentation broth originating from cultures of microorganisms, preferably comprising lipid producing microorganism, is used as in-feed antibiotics replacer. The thermally treated bacterial culture can be used as such or in the form of sludge or a solid residue obtained after partial or complete elimination (e.g. evaporation) of the water. This sludge or solid residue can be dissolved in a suitable liquid (e.g. an aqueous medium) before use.

Accordingly, it has been surprisingly found by the inventors that the composition of the present invention obtainable by heat treating a liquid phase from fermentation, which originates from the cultivation of microorganisms on a suitable on medium, preferably comprising lignocellulosic material, has this ability of preventing and reducing the adverse effects of unwanted and/or pathogenic microorganisms due to its antimicrobial activity.

The substances that are created during the thermal processing and which are responsible for the antibiotic effect of the composition include sugar degradation compounds, polymerized sugars, aromatic compounds and monomerized phenolic compounds and Maillard reaction products.

The aqueous fraction obtained after concentration of a spent fermentation broth originating from cultures of microorganisms treated by HTT and solids recovered after HTT can be used for the preparation of products which need antimicrobial activity, preferably as feed or food additives.

To achieve the above aims, the invention is characterized by the features of the independent claims. The dependent claims are directed at preferred embodiments of the invention.

In the invention, the applied thermal processing can be used to create significant changes in the composition of the liquid phase of cultures of microorganisms (i.e. the fermentation broth). The microorganisms are preferably lipid producing microorganisms. These changes may result, for example, in the polymerization of sugars, formation of sugar degradation products, formation of aromatic compounds, monomerization of phenolic compounds and formation of Maillard reaction products and lead to the possibility of using this heat treated spent fermentation broth an in-feed antibiotic or antibiotic replacer having antimicrobial activity.

The composition of the present invention shows antimicrobial activity against Enterobacteriaceae, Campylobacteraceae or Clostridiaceae, in particular microorganisms belonging to the genera *Salmonella, Shigella, Campylobacter,* e.g. *C. jejuni, , Clostridium,* e.g. *C. difficile* or *C. perfringens , Vibrio,* e.g. *V.cholera, V. parahaemolyticus, Staphylococcus aureus* and (pathogenic) *Escherichia coli. C. jejuni,* In particular, the composition of the invention can be used as an antibiotic against at least one microorganism selected from the gropu consisting of *Clostridium difficile, Clostridium perfringens, Vibrio cholera, Vibrio parahaemolyticus, Staphylococcus aureus* and pathogenic strains of *Escherichia coli.*

The liquid water fraction obtained from HTT can be concentrated to form a sludge or a solid, which can be used as animal feed additive with antimicrobial properties and be used as an in-feed antibiotic or antiobiotic replacer.

**Brief description of the Figures**

Figure 1 shows OD measurements for a commensal *Escherichia coli* strain at 0 hours and after 2 and 3.5 hours of growth at different concentrations of product A and a control (Control) without product addition.

Figure 2 shows OD measurements for a pathogenic *Escherichia coli* strain at 0 hours and after 2 and 3.5 hours of growth at different concentrations of product A and a control (Control) without product addition.

Figure 3 shows OD measurements for *Salmonella enterica* at 0 hours and after 3.25 and 4 hours of growth at different concentrations of product A and a control (Control) without product addition.

Figure 4 shows OD measurements for *Enterococcus faecium* at 0 hours and after 3 and 4.25 hours of growth at different concentrations of product A and a control (Control) without product addition.

Figure 5 shows OD measurements for *Lactobacillus reuteri* at 0 hours and after 3 and 6 hours of growth at different concentrations of product A and a control (Control) without product addition.

Figure 6 shows OD measurements for *Lactobacillus crispatus* after at 0 hours and after 6 and 8 hours of growth at different concentrations of product A and a control (Control) without product addition.

Figure 7 shows OD measurements for *Clostridium perfringens* at 0 hours and after 2.5 and 3.5 hours of growth at different concentrations of product A and a control (Control) without product addition.

Figure 8 shows OD measurements for *Campylobacter jejuni* after 17 hours of growth at different concentrations of product A and a control (Control) without product addition.

Figure 9 shows OD measurements for mixed ileal microbiota at 0 hours and after 2 and 4 hours of growth at different concentrations of product A and a control (Control) without product addition.

Figure 10 shows OD measurements for a commensal *Escherichia coli* strain at 0 hours and after 2 and 3.5 hours of growth at different concentrations of product B and a control (Control) without product addition.

Figure 11 shows OD measurements for pathogenic *E.coli* strain at 0 hours and after 2 and 3.5 hours of growth at different concentrations of product B and a control (Control) without product addition.

Figure 12 shows OD measurements for *Salmonella enterica* at 0 hours and after 3.25 and 4 hours of growth at different concentrations of product B and a control (Control) without product addition.

Figure 13 shows OD measurements for *Enterococcus faecium* at 0 hours and after 3 and 4.25 hours of growth at different concentrations of product B and a control (Control) without product addition.

Figure 14 shows OD measurements for *Lactobacillus reuteri* at 0 hours and after 3 and 6 hours of growth at different concentrations of product B and a control (Control) without product addition.

Figure 15 shows OD measurements for *Lactobacillus crispatus* at 0 hours and after 6 and 8 hours of growth at different concentrations of product B and a control (Control) without product addition.

Figure 16 shows OD measurements for *Clostridium perfringens* at 0 hours and after 2.5 and 3.5 hours of growth at different concentrations of product B and a control (Control) without product addition.

Figure 17 shows OD measurements for *Campylobacter jejuni* after 17 hours of growth at different concentrations of product B and a control (Control) without product addition.

Figure 18 shows OD measurements for mixed ileal microbiota at 0 hours and after 2 and 4 hours of growth at different concentrations of product B and a control (Control) without product addition.

Figure 19 shows OD measurements for a commensal *Escherichia coli* strain at 0 hours and after 2 and 3.5 hours of growth at different concentrations of product C and a control (Control) without product addition.

Figure 20 shows OD measurements for a pathogenic *Escherichia coli* strain at 0 hours and after 2 and 3.5 hours of growth at different concentrations of product C and a control (Control) without product addition.

Figure 21 shows OD measurements for *Salmonella enterica* at 0 hours and after 2h and 3.5 hours of growth at different concentrations of product C and a control (Control) without product addition.

Figure 22 shows OD measurements for *Enterococcus faecium* at 0 hours and after 3 and 4.5 hours of growth at different concentrations of product C and a control (Control) without product addition.

Figure 23 shows OD measurements for *Lactobacillus reuteri* at 0 hours and after 3 and 5 hours of growth at different concentrations of product C and a control (Control) without product addition.

Figure 24 shows OD measurements for *Lactobacillus crispatus* after at 0 hours and after 5.5 and 8 hours of growth at different concentrations of product C and a control (Control) without product addition.

Figure 25 shows OD measurements for *Clostridium perfringens* at 0 hours and after 3 and 4 hours of growth at different concentrations of product C and a control (Control) without product addition.

Figure 26 shows OD measurements for mixed ileal microbiota at 0 hours and after 2, 4 and 5 hours of growth at different concentrations of product C and a control (Control) without product addition.

Figure 27 shows SYBR Green fluorescence measurements for *Campylobacter jejuni* at 0 hours and after 14 and 17 hours of growth at different concentrations of product C and a control (Control) without product addition.

Figure 28 shows OD measurements for a commensal *Escherichia coli* strain at 0 hours and after 2 and 3.5 hours of growth at different concentrations of product D and a control (Control) without product addition.

Figure 29 shows OD measurements for a pathogenic *Escherichia coli* strain at 0 hours and after 2 and 3.5 hours of growth at different concentrations of product D and a control (Control) without product addition.

Figure 30 shows OD measurements for *Salmonella enterica* at 0 hours and after 2h and 3.5 hours of growth at different concentrations of product D and a control (Control) without product addition.

Figure 31 shows OD measurements for *Enterococcus faecium* at 0 hours and after 3 and 4.5 hours of growth at different concentrations of product D and a control (Control) without product addition.

Figure 32 shows OD measurements for *Lactobacillus reuteri* at 0 hours and after 3 and 5 hours of growth at different concentrations of product D and a control (Control) without product addition.

Figure 33 shows OD measurements for *Lactobacillus crispatus* after at 0 hours and after 5.5 and 8 hours of growth at different concentrations of product D and a control (Control) without product addition.

Figure 34 shows OD measurements for *Clostridium perfringens* at 0 hours and after 3 and 4 hours of growth at different concentrations of product D and a control (Control) without product addition.

Figure 35 shows OD measurements for mixed ileal microbiota at 0 hours and after 2, 4 and 5 hours of growth at different concentrations of product D and a control (Control) without product addition.

Figure 36 shows SYBR Green fluorescence measurements for *Campylobacter jejuni* at 0 hours and after 14 and 17 hours of growth at different concentrations of product D and a control (Control) without product addition.

Figure 37 shows OD measurements for a commensal *Escherichia coli* strain at 0 hours and after 2 and 3.5 hours of growth at different concentrations of product E and a control (Control) without product addition.

Figure 38 shows OD measurements for a pathogenic *Escherichia coli* strain at 0 hours and after 2 and 3.5 hours of growth at different concentrations of product E and a control (Control) without product addition.

Figure 39 shows OD measurements for *Salmonella enterica* at 0 hours and after 2h and 3.5 hours of growth at different concentrations of product E and a control (Control) without product addition.

Figure 40 shows OD measurements for *Enterococcus faecium* at 0 hours and after 3 and 4.5 hours of growth at different concentrations of product E and a control (Control) without product addition.

Figure 41 shows OD measurements for *Lactobacillus reuteri* at 0 hours and after 3 and 5 hours of growth at different concentrations of product E and a control (Control) without product addition.

Figure 42 shows OD measurements for *Lactobacillus crispatus* after at 0 hours and after 5.5 and 8 hours of growth at different concentrations of product E and a control (Control) without product addition.

Figure 43 shows OD measurements for *Clostridium perfringens* at 0 hours and after 3 and 4 hours of growth at different concentrations of product C and a control (Control) without product addition.

Figure 44 shows OD measurements for mixed ileal microbiota at 0 hours and after 2, 4 and 5 hours of growth at different concentrations of product E and a control (Control) without product addition.

Figure 45 shows SYBR Green fluorescence measurements for *Campylobacter jejuni* at 0 hours and after 14 and 17 hours of growth at different concentrations of product E and a control (Control) without product addition.

Figure 46 schematically illustrates examples for two alternative process flows of the method for preparing a composition having antimicrobial activity.

## Detailed description of the invention

The present invention provides a method for preparing a composition having antimicrobial activity. Such composition is obtainable by cultivating microorganisms on a cultivation medium, optionally comprising lignocellulosic material and treating the aqueous suspension by separating and isolating a liquid phase (i.e. the composition of the invention) from a solid phase followed by hydrothermal processing of the liquid phase.

The present invention provides a method for preparing a composition having antimicrobial activity, comprising the steps of (a) providing a spent fermentation broth from which microorganism has optionally been removed; (b) subjecting said spent fermentation broth to a temperature of at least 160°C for 1 second to 360 minutes at a pressure above 5 bar (0.5 MPa).

According to this disclosure, the compositon obtained by the method of the invention from the above aqueous suspension has been shown to have an antimicrobial activity inhibiting the binding growth of unwanted and/or pathogenic bacteria. Additionally, this composition obtained by the method of the invention can modulate the microbiota of the small intestine towards the wanted heterofermentative lactic acid bacteria.

By "antimicrobial activity" is meant that the respective agent/material kills microorganisms and/or inhibits the growth of microorganisms (e.g. bacteria, fungi etc.).

By "microbiota modulator" a compound is meant, which results in decreased growth of specific pathogenic and/or other harmful microorganisms in an animal digestive system shifting the microbiota of the gastro-internal tract towards wanted bacteria.

By "unwanted microorganism" any microorganism is meant, which adversely influences the well-being and/or productivity of an animal.

By "pathogen" or "pathogenic microorganism" any microorganism, typically a bacterium or a fungus, is meant which causes diseases and/or disorders in animals or human beings and adversely influences the health of an animal or a human being.

Pathogens comprise species, for example, from Enterobacteriaceae, Campylobacteraceae or Clostridiaceae and exemplified genera are *Salmonella, Shigella, Campylobacter,* e.g. *C. jejuni, , Clostridium,* e.g. *C. difficile* or *C. perfringens , Vibrio,* e.g. *V.cholera, V. parahaemolyticus, Staphylococcus aureus* and *Escherichia coli.*

The term "spent fermentation broth" as used herein refers to a cultivation medium in which microorganisms ("biomass") were cultivated and from which the biomass is optionally removed.

By "aqueous suspension" a mixture of insoluble particles in water is meant. In the present invention, this term encompass cultures of microorganisms.

By "microorganism culture" an aqueous suspension is meant, which comprises microbial cells suspended in an aqueous media together with a suitable substrate (culture medium) being dissolved in water (e.g. fermentation liquids for cultivation of microorganisms for production of oil).

By "a microorganism" is meant any microorganism, such as a fungus, preferably a filamentous fungus or yeast, algae including heterotrophic algae, a bacterium or an archaebacterium, which microorganism is capable of producing cellular biomass. A microorganism is able to produce microbial biomass when it is grown on cultivation medium comprising a source of carbon. Preferably said microorganism is a filamentous fungus or yeast. Most preferably the microorganism is a filamentous fungi from the genus *Aspergillus* and/or *Mortierella* or yeasts from genus *Rhodosporidium, Rhodotorula, Cryptococcus, Lipomyces* or *Saccharomyces.*

In the context of the present invention the term "biomass" (or "cell mass") refers to biological material derived from living or non-living organisms. "Microbial biomass" or "microorganism biomass" thus refers to biomass derived from a microorganism(s). The microbial biomass may be obtained from a single species of microorganism or a pool of different species of microorganisms. The microbial biomass may exist in a living or a non-living state. In the context of the present invention, the microbial biomass, which has been subjected to hydrothermal heat treatment (HTT) is in a non-living state.

"Hydrothermally processed microbial biomass" thus refers to microbial biomass, which have been subjected to hydrothermal processing. It follows from the above that hydrothermally processed microbial biomass according to this disclosure refers to biomass of microorganisms in a non-living state since the hydrothermal processing of microbial biomass disrupts the structure of the biomass cells.

By "lipid producing microorganism" or "oleaginous microorganism" is meant a microorganism that is able to produce and accumulate in their cell biomass more than 15% lipids from their dry cell biomass weight when cultivated in suitable conditions for lipid production. Alternatively or in addition microorganism may be able to excrete lipids outside the cells e.g. to the cultivation medium.

By "lignocellulosic material" is meant any material which comprises lignocellulose. Lignocellulosic material comprises lignocellulose, fragments of lignocellulose or hydrolysis products of lignocellulose including saccharides, such as mono-, di-, and/or oligosaccharides originating from lignocellulose. "Lignocellulosic material" may comprise also other components in addition to lignocellulose such as other components from wood or herbaceous plants.

"Lignocellulose" comprises carbohydrate polymers cellulose and hemicellulose and aromatic polymer lignin. Lignocellulosic material include but is not limited to woody plants or non-woody, herbaceous plants or other materials containing cellulose and/or hemicellulose: Materials can be agricultural residues (such as wheat straw, rice straw, chaff, hulls, corn stover, sugarcane, bagasse), dedicated energy crops (such as switchgrass, miscanthus, reed canary grass, willow, water hyacinth), wood materials or residues (including sawmill and pulp and/or paper mill residues or fractions, such as hemicellulose, spent sulphite liquor, waste fibre and/or primary sludge), moss or peat, or municipal paper waste. The term lignocellulosic material comprises also low lignin materials, materials such as macroalgae biomass. In addition, the materials comprise also hemicellulose or cellulose fractions from industrial practices. The term lignocellulosic material encompasses any kind of cellulose fraction. The raw materials or certain fractions, such as hemicellulose and/or cellulose, of raw materials from different origin, plant species, or industrial processes can be mixed together and used as raw materials for cultivating microorganisms.

The term lignocellulosic material comprises at least 50 wt% lignocellulose, preferably at least 60 wt% lignocellulose, more preferably at least 70 wt% lignocellulose, most preferably at least 80 wt% lignocellulose. Usually lignocellulosic material comprises 60-95 wt% lignocellulose, typically 70-90 wt% or 80-90 wt% lignocellulose.

"A cultivation medium comprising lignocellulosic material" means a cultivation medium for cultivating a microorganism, which medium comprises lignocellulose, fragments of lignocellulose or hydrolysis products of lignocellulose including, nitrogen compounds originating from proteins and metals, and other components necessary for cultivating said microorganism, such as a source of nitrogen, phosphorus, inorganic salts and/or trace elements. Lignocellulose may function as a carbon source for said microorganism, but it may also have other functions in the cultivation medium.

"Hydrolysis" refers here to saccharification of polymeric sugars to sugar oligomers and monomers. Saccharification is typically carried out in two phases: first the substrate i.e. lignocellulosic material or lignocellulose is hydrolyzed by thermochemical or chemical methods and then by using enzymes capable of hydrolysing polymeric sugars. Alternatively, and depending on the lignocellulosic material, saccharification can be carried out by using thermochemical or chemical methods or by enzymes capable of hydrolysing polymeric sugars or some combination of these methods. Chemical methods include, but are not limited to acid treatment.

"Lignocellulose hydrolysate" means the hydrolysis products of lignocellulose or lignocellulosic material comprising cellulose and/or hemicellulose, oligosaccharides, mono- and/or disaccharides, acetic acid, formic acid, other organic acids, furfural, hydroxymethyl furfural, levulinic acid, phenolic compounds, other hydrolysis and/or degradation products formed from lignin, cellulose, hemicellulose and/or other components of lignocellulose, nitrogen compounds originating from proteins, metals and/or non-hydrolyzed or partly hydrolyzed fragments of lignocellulose.

"A cultivation medium comprising saccharides" means here a cultivation medium, which comprises mono-, di-, and/or oligosaccharides from lignocellulose.

"A cultivation medium comprising pure saccharides" means here a cultivation medium, which comprises mono-, di- and/or oligosaccharides, which are not produced by hydrolysis of lignocellulose. Pure saccharides include, e.g., starch or starch derived sugars, sugar cane or sugar beet derived sugars.

"Single-cell oil" stands typically for an intracellular lipid that has been intracellularly synthesized by a microorganism, lipids excreted by the cell, as well as lipids present in the structural parts of a cell, such as in membrane systems.

By "single-cell oil production process" is meant a process where microorganisms are used to produce oils. In the process, microorganisms are cultivated on organic carbon sources and microorganisms are let to produce oil. Microorganisms can store the oil intracellularly or excrete it out from the cell. Organic carbon source can be pure saccharides, lignocellulosic material, or starch. Single-cell oil process typically utilizes microorganisms, such as oleaginous microorganisms, that are capable of producing lipids efficiently.

"Lipid recovery" or" oil recovery" refers to a process, in which the lipid (intracellular lipid) is recovered by mechanical, chemical, biochemical, thermomechanical or autocatalytic methods or by a combination of these methods from the microorganism cells.

The terms "hydrothermal processing" or "hydrothermal treatment" or "heat treatment" (HTT) are used synonymously herein, and refer to a process in which an aqueous suspension comprising the composition of the invention or the isolated composition is subjected to a temperature of at least 160°C for 1s to 360 minutes at a pressure ≥ 5 bar (0.5 MPa).

The term "severity factor" refers here to a parameter $\mathrm{LogR_0}$, which is calculated based on the following equation and which describes the hydrothermal conditions in terms of temperature and time.

$$R_0 = \int_a^b \exp\left(\frac{T(t) - 100}{14.75}\right) dt = t \cdot \exp\left(\frac{T(t) - 100}{14.75}\right)$$

By "feed or food ingredient" a component part or constituent of any combination or mixture making up a feed or food is meant, whether or not it has a nutritional value in the animal's or human's diet. Ingredients are of plant, animal or aquatic origin, or other organic or inorganic substances.

In the context of the present invention "feed or food additive" refers to a composition, which essentially does not have a nutritional value in the animal's or human's diet. The "feed or food additive" of the present invention has antimicrobial activity.

The feed or food composition for may be used in the composition as a food or feed topping, food or feed extender or feed or food supplement.

In the present invention the terms "dry matter" or ""dry matter content" refers to the mass of the respective sample or product (material) when being completely dried with respect to the whole material without removal of water, i.e. the proportion of the total dry matter in the material. The dry matter (content) is expressed in "%" (or "w-%").

In the following, the embodiments of the present invention are described in more detail.

The inventors have discovered that the product of the method disclosed herein has the capacity to inhibit the growth of unwanted and/or pathogenic microorganisms due to its antimicrobial properties. As mentioned herein, this capacity of the hydrothermally processed composition obtained by the method of the invention is considered to be due to the hydrothermal processing.

A method of the invention for preparing a composition having antimicrobial activity, comprises the steps of (a) providing a spent fermentation broth from which microorganism has optionally been removed; (b) subjecting said spent fermentation broth to a temperature of at least 160°C for 1 second to 360 minutes at a pressure above 5 bar (0.5 MPa).

A preferred method for preparing the composition of the invention having antimicrobial activity, the spent fermentation broth subjected to step (b) is concentrated in a further step (c). That is, the composition having antimicrobial activity obtained in step (b) can be used as it is or may be further treated in step (c) to become a concentrated composition ("sludge"), which is concentrated by methods known in the art like evaporation, membrane filtration, ultrafiltration etc.

In a further preferred embodiment of the method for preparing the composition of the invention, the method consists of the indicated steps, i.e., there are no further steps between the indicated steps (a) and (b), or (a), (b) and (c).

Where it is desired, a dry form of the liquid phase containing may be obtained by subjecting the liquid phase to a step of completely drying the composition. Any of these alternative forms (non-concentrated, sludge or dried product) represent the composition having antimicrobial activity of the invention.

Depending on the method applied, the composition having antimicrobial activity may comprise residual but minor amounts of solid matter.

The composition having antimicrobial activity may optionally be treated mechanically, thermochemically, chemically and/or enzymatically prior to its use.

In a preferred embodiment, said composition having antimicrobial activity is obtained from a fermentation process preferably using cultures of microorganisms for production of oil, which are preferably cultivated on lignocellulosic material.

According to a preferred embodiment of the invention, the liquid composition is further concentrated to form sludge and the sludge can directly be used, e.g., as additive for feed or food.

In embodiments where the microorganism is cultivated on lignocellulosic material, in particular lignocellulose hydrolysate, at the end of the cultivation, the liquid phase of the culture may comprise also hydrolysis products or residues of lignocellulose. Such residues are for example, acetic acid, formic acid, other organic acids, furfural, hydroxymethyl furfural, levulinic acid, phenolic compounds, other hydrolysis or degradation products formed from lignin, cellulose or hemicellulose or other components of lignocellulose, or non-hydrolyzed or partly hydrolyzed fragments of lignocellulose. Hence, if microorganisms are cultivated on lignocellulose hydrolysate, the culture medium/nutrient solution (i.e. the liquid phase) typically comprises lignocellulose hydrolysis products or residues, which the microorganism has not utilized during cultivation or which the microorganism were not able to utilize, for example lignin, polysaccharides and mono-, di- or oligosaccharides.

The amount of lignocellulose hydrolysis products or residues is typically 0.01 - 20 wt%, usually 0.5 - 10 wt % of dry weight of the culture medium. The amount of phenolic compounds originating from lignocellulosic materials is typically 0.01 - 10 wt%, usually 0.05 - 5 wt % of the dry weight of the culture medium.

Depending on the source of the lignocellulosic material and on other components of the cultivation medium, the culture medium may comprise for example residues of various proteins and lipids but also secondary metabolites from the respective microorganism.

In one embodiment of the invention, the microorganism is cultivated on lignocellulosic hydrolysate containing lignocellulose hydrolysis or degradation products not utilized by microorganism, such as phenolic compounds and furfural. These compounds are formed in the hydrolysis of lignocellulose. The lignocellulose hydrolysis can be performed by thermochemical treatment, steam explosion, hot water extraction, autohydrolysis, sub critical water treatment, supercritical water treatment, strong acid treatment, mild acid treatment, alkaline treatment (e.g. lime, ammonia), Organosolv treatment (e.g. alcohols, organic acids), mechanical treatment, thermomechanical treatment, ionic liquid treatment in addition to enzymatic treatment. Without being bound by any theory it is also considered that lignocellulosic residues if present in the hydrothermally processed composition may be at least partly responsible for the antimicrobial effect.

Preferred microorganism strains for the cultures of microorganisms for production of oil are from the species and genera listed below:

Preferred fungal strains are from species from genera *Aspergillus* such as *Aspergillus oryzae, Mortierella* such as *Mortierella isabellina, Chaetomium, Claviceps, Cladosporidium, Cunninghamella, Emericella, Fusarium, Glomus, Mucor, Paecilomyces, Penicillium, Pseudozyma, Pythium, Rhizopus, Tremella, Trichoderma, Zygorhynchus, Humicola, Cladosporium, Malbranchea, Umbelopsis* such as *Umbelopsis isabellina* and *Ustilago.*

Preferred yeast strains are those belonging to species from genera *Clavispora, Geotrichum, Deparyomyces, Pachysolen, Kluyveromyces, Galactomyces, Hansenula, Leucosporidium, Saccharomyces, Sporobolomyces, Sporidiobolus, Waltomyces, Endomycopsis, Cryptococcus,* such as *Cryptococcus curvatus, Rhodosporidium,* such as *Rhodosporidium toruloides* or *Rhodosporidium fluviale, Rhodotorula,* such as *Rhodotorula glutinis, Yarrowia,* such as *Yarrowia lipolytica, Pichia,* such as *Pichia stipitis, Candida* such as *Candida curvata, Lipomyces* such as *Lipomyces starkeyi* and *Trichosporon* such as *Trichosporon cutaneum or Trichosporon pullulans.* Most preferred yeasts are from genus *Rhodosporidium, Rhodotorula, Cryptococcus, Lipomyces or Saccharomyces.*

Preferred cultivated bacteria are those belonging to the species from genera *Acinetobacter, Actinobacter, Alcanivorax, Aerogenes, Anabaena, Arthrobacter, Bacillus, Clostridium, Dietzia, Gordonia, Escherichia, Flexibacterium, Micrococcus, Mycobacterium, Nocardia, Nostoc, Oscillatoria, Pseudomonas, Rhodococcus, Rhodomicrobium, Rhodopseudomonas, Shewanella, Shigella, Streptomyces* and *Vibrio.*

Most preferred algae are microalgae, such as microalgae species from genera comprising *Achnantes, Amphiprora, Amphora, Ankistrodesmus, Attheya, Boeklovia, Botryococcus, Biddulphia, Brachiomonas, Bracteococcus, Carteria, Chaetoceros, Characium, Chlamydomonas, Crypthecodinium, Cryptomonas, Chlorella, Chlorococcum, Chrysophaera, Coccochloris, Cocconeis, Cyclotella, Cylindrotheca, Dunaliella, Ellipsoidon, Entomoneis, Euglena, Eremosphaera, Extubocellulus, Franceia, Fragilaria, Gleothamnion, Hantzschia, Haematococcus, Hormotilopsis, Hymenom-*

*onas, Isochrysis, Lepocinclis, Melosira, Minidiscus, Micractinum, Monallanthus, Monoraphidium, Muriellopsis, Nannochloris, Nannochloropsis, Navicula, Neochloris, Nephroselmis, Nitzschia Ochromonas, Oedogonium, Oocystis, Papiliocellulus, Parachlorella, Pascheria, Pavlova, Peridinium, Phaeodactylum, Plankthothrix, Platymonas, Pleurochrysis, Pleurosigma, Porphyridium, Prototheca, Prymnesium, Pseudochlorella, Pyramimonas, Pyrobotrus, Radiosphaera, Rhodomonas, Rhodosorus, Sarcinoid, Scenedesmus, Schizochytrium, Scrippsiella, Seminavis, Skeletonema, Spirogyra, Stichococcus, Synedra, Tetraedron, Tetraselmis, Thalassiosira, Trachyneis, Traustrochytrium, Trentepholia, Ulkenia, Viridiella,* and *Volvox.* The organisms belonging to the genera *Schizochytrium, Thraustochytrium* and *Crypthecodinium* and *Ulkenia* are sometimes called as marine fungi.

In some embodiments of the invention, a microorganism is preferably cultivated on a medium comprising mono-, di-, and/or oligosaccharides originating from lignocellulose or on pure saccharides. Depending on the unwanted and/or pathogenic microorganism either the whole range of hydrolysis products of lignocellulose, or saccharides (mono-, di- and/or oligosaccharides) obtained as hydrolysis products from lignocellulose or pure saccharides, give a more effective liquid composition having antimicrobial activity.

In some embodiments of the invention, the microorganism cultivated on a medium comprising lignocellulosic material is able to hydrolyse lignocellulose to sugar oligomers and monomers. In preferred embodiments lignocellulosic material or feedstock comprising polymeric sugars is hydrolyzed to monomeric sugars thermochemically and/or chemically and/or by enzymes before cultivation. In preferred embodiments of the invention, lignocellulosic material containing polymeric sugars is hydrolysed thermochemically and/or chemically and/or by enzymes to contain oligomeric sugars and the microorganism cultivated on a medium comprising lignocellulose is able to utilize these sugar oligomers.

In a preferred embodiment of the present invention, the composition of the invention is obtained from a single cell oil production process. In another embodiment, the composition is obtained from an alcohol production process, preferably from an ethanol production process.

In another embodiment, the aqueous suspension comprising the composition of the invention contains a cultivation medium comprising starch and/or sugar cane/beet derived sugars.

After cultivation of the microorganisms, the microorganisms and other solid components may be separated from the culture medium by any known methods, such as by using a filtration or decanting techniques. Alternatively, centrifugation with industrial scale commercial centrifuges of large volume capacity may be used to separate the desired products.

In an embodiment of the invention, oil, or precursors for oil, may be recovered from the liquid phase provided in the form of a culture broth using any method known in the art or developed in the future. Such methods, include, but are not limited to extraction with organic solvents or mechanical pressing.

The hydrothermal processing (HTT) in step (b) of the method for preparing the composition of the invention is conducted at a pressure above 5 bar (0.5 MPa), such as in the range of 6 to 25 bar (0.6 to 2.5 MPa), for example in the range of 10 to 25 bar (1.0 to 2.5 MPa), such as in the range of 10 to 15 bar (1.0 to 1.5 MPa). The hydrothermal processing (step (b)) is conducted for 1 second to 360 minutes, such as in the range of 5 minutes to 240 min, for example in the range of 10 minutes to 120 min. In one embodiment, the hydrothermal treatment is conducted at a temperature of from 180 °C to 250 °C. In another embodiment, the hydrothermal treatment is conducted in conditions corresponding to a severity factor of at least 2.5, preferably of at least 3.5, most preferably at least 3.9. The HTT is preferably conducted under the specific conditions described in WO 2011/143380 A1.

It should be noted that in the context of the present invention the above mentioned methods, i.e. thermochemical treatment, steam explosion, hot water extraction, autohydrolysis, sub critical water treatment, super critical water treatment, strong acid treatment, mild acid treatment, alkaline treatment (e.g. lime, ammonia), Organosolv treatment (e.g. alcohols, organic acids), mechanical treatment, thermomechanical treatment and ionic liquid treatment does not fall within the definition of hydrothermal processing (or hydrothermal treatment, heat treatment, HTT).

As mentioned herein, the method for preparing the composition of the invention is obtainable from an aqueous suspension, which is preferably derived from a culture of microorganisms which the may contain one or more type or species of microorganism. Thus, in one embodiment, the hydrothermally processed composition of the invention is obtained from the culture of one or more microorganism. It follows that the composition of the invention and the products comprising this composition may comprise substances originating from the culture of more than one microorganism. As mentioned herein, the composition of the invention used by the invention may be obtained from a wide range of microorganisms including both unicellular and multicellular microorganisms.

In a preferred embodiment, the composition of the invention is obtained from a culture of one or more fungi, preferably yeasts or filamentous fungi. In one embodiment of the invention, the composition which is obtainable by the method of the invention is obtained from a culture of *Rhodosporidium, Rhodotorula, Cryptococcus, Lipomyces,* or *Saccharomyces.*

In a further preferred embodiment, at least a major part of the composition of the invention, obtainable by the method of the invention is obtained from a culture of a strain of *Rhodosporidium.* In a alternatively preferred embodiment, the composition of the invention is obtained from a culture of strains of *Aspergillus* and/or *Mortierella.*

In a preferred embodiment of the present invention, the hydrothermally processed composition of the invention having antimicrobial activity is obtained from a culture of oleaginous microorganisms. It follows that the composition of the present invention may comprise a by-product from a microbial lipid production process which is excreted from the microorganism, or which represent a reaction product of substances excreted from the microorganism and substances being present in the culture medium, or which represent a reaction product of substances being present in the culture medium which are modified by enzymes or catalytic active substances excreted from the microorganism.

In a preferred embodiment of the invention, the hydrothermally processed composition obtainable by the above method can be used as an antimicrobial agent, which preferably acts in the animal or human digestive tract, preferably in animal or human stomach, small intestine and/or colon.

The composition of the invention having antimicrobial activity can be added to any product for which the presence or manifestation of an antimicrobial effect is desirable. Examples of such products are cosmetics, medicaments, human food or animal feed, but include also different chemical products like paints. The composition can also be used as an antimicrobial finishing on materials like wood.

The composition of the invention prevents or reduces the amount of unwanted and/or pathogenic microorganisms in the digestive tract of animals and the subsequent distribution of the microorganism in the blood and/or other target organs. In one embodiment of the present invention the composition of the invention prevents or reduces the adverse effects of one or more unwanted and/or pathogenic microorganism in animal or human stomach, small intestine and/or colon due to its antimicrobial activity.

Advantageously a product comprising the composition is prepared by mixing a specific amount of the hydrothermally processed composition to a material for obtaining a product. In a preferred embodiment, the composition is an additive for feed or food and the obtained products are feed or food.

In a preferred embodiment of the invention, a product is prepared which preferably comprises 0.001-50 wt %, more preferably 0.1-3 wt % of the weight of said non-concentrated hydrothermally processed composition having antimicrobial activity being obtainable as disclosed herein.

Unwanted microorganisms comprise strains of microorganisms belonging to the Lactobacillaceae and which are homofermentative lactic acid producers (e.g. *Lactobacillus crispatus* or *Enterococcus faecium*) resulting in a low performance in broiler chicken and/or which transfer horizontally antibiotic resistance genes more than other intestinal bacteria. These strains may be inhibited in order to promote the growth of other, beneficial strains of Lactobacillaceae showing a preferred heterofermentative lactic acid production and which are less affected by the present composition (e.g. *Lactobacillus reuteri*).

Advantageously, a product is prepared by mixing a specific amount of composition of the invention having antimicrobial activity to a material like feed or food. The concentration of the composition of the invention in the material depends on the intended effect against specific unwanted and/or pathogenic microorganisms. The best concentration for each specific use may be determined by the skilled in the art by applying generally known tests like prior art methods for the measurement of the minimum inhibitory concentration (MIC).

MICs can be determined by agar or broth dilution methods usually following the guidelines of a reference body such as the CLSI, BSAC or EUCAST. There are several commercial methods available.

A test for assessing the antimicrobial activity against specific microorganisms and the measurement of the MIC is the preparation of dilution series of the substance to be tested (i.e. the composition of the invention), wherein the various dilutions are added to a culture of the respective microorganism and the growth is measured. The lowest concentration inhibiting the growth of the tested microorganism is defined as the MIC.

In a particularly preferred embodiment, the minimum inhibitory concentration of the composition for harmful and/or unwanted bacteria is lower than for beneficial intestinal bacteria.

In a preferred embodiment the microorganism to be inhibited is selected from the families of Enterobacteriaceae, Lactobacillaceae, Campylobacteraceae or Clostridiaceae. In a preferred embodiment the microorganism to be inhibited is selected from the *genera Salmonella, Shigella, Campylobacter, Clostridium, Vibrio, Staphylococcus* and *Escherichia.*

In a preferred embodiment, the microorganism to be inhibited is selected from the group consisting of *Salmonella enterica* (foodborne pathogen), *Escherichia coli* (pathogenic strain F4+), *Clostridium perfringens* (causative agent of necrotic enteritis), *Campylobacter jejuni* (foodborne pathogen), *Vibrio cholera, Vibrio parahaemolyticus, Staphylococcus aureus, Lactobacillus crispatus* (homofermentative lactic acid bacterium) *Enterococcus faecium* (homofermentative lactic acid bacterium). In a preferred embodiment, the microorganism to be inhibited is *Salmonella enterica* (foodborne pathogen). In a preferred embodiment, the microorganism to be inhibited is *Escherichia coli* (pathogenic strain F4+). In a preferred embodiment, the microorganism to be inhibited is *Clostridium perfringens* (causative agent of necrotic enteritis). In a preferred embodiment, the microorganism to be inhibited is *Campylobacter jejuni* (foodborne pathogen). In a preferred embodiment, the microorganism to be inhibited is *Lactobacillus crispatus* (homofermentative lactic acid bacterium). In a preferred embodiment, the microorganism to be inhibited is *Enterococcus faecium* (homofermentative lactic acid bacterium).

The composition of the invention having antimicrobial activity can be used as an additive for feed or food. In this connection the additive for feed or food may consists of the composition or may further comprise suitable ingredients acting as stabilizing or formulating agents.

In a preferred embodiment, an additive for feed or food is prepared to comprise preferably 0,1-10 wt %, more preferably 0,1-3 wt % of the weight of said concentrated hydrothermally processed composition having antimicrobial activity being obtainable as disclosed herein.

Advantageously, a feed or food is prepared by mixing a specific amount of composition of the invention having antimicrobial activity to feed or food. The concentration of the composition of the invention in the additive for feed or food and the final feed or food depends on the intended effect against specific unwanted and/or pathogenic microorganisms. The best concentration for each specific use may be determined by the skilled in the art by applying generally known tests like prior art methods for the measurement of the minimum inhibitory concentration (MIC).

In a preferred embodiment, a feed or food is prepared to comprise preferably 0,1-10 wt %, more preferably 0.1-3 wt % of the weight of said concentrated hydrothermally processed composition having antimicrobial activity being obtainable as disclosed herein.

The present invention provides a method for feeding an animal, said method comprising feeding said animal with a feed product comprising an feed additive which comprises the composition of the present invention.

In one embodiment, said animal is a ruminant or monogastric animal. In another embodiment, said animal is aquaculture such as fish, mollusk or shrimp feed composition. The feed product thus comprises the hydrothermally processed composition of the invention and components or ingredients suitable for aquaculture feed composition, such as a source of protein and fat components.

In a further embodiment, said animal is a livestock such as a livestock selected from the list consisting of pigs, horses, poultry, cattle, goats and sheep. In a preferred embodiment, the animal is a chicken, more preferably a broiler chicken. In another preferred embodiment, the animal is a pig.

Animals include a ruminant or monogastric animal. Thus in one embodiment of the present invention, the feed composition is a ruminant or monogastric animal feed composition. Animals also include an aquatic organisms, such as fish, mollusk or shrimp feed. Thus in yet another embodiment, the composition is an aquaculture feed composition such as fish, mollusk or shrimp feed composition.

In a further embodiment of the invention the food composition is a nutritional product for human use. In a particular embodiment, the hydrothermally processed composition is used in the composition as a food or feed topping, food or feed extender or food or feed supplement.

In further embodiments of the invention the food product is a nutritional product for human use. The food product then comprises hydrothermally processed composition and components or ingredients suitable for food. Such components or ingredients comprise for example salt and sugar or other flavour giving ingredients.

The hydrothermally processed composition may be used in the feed or food product as a food or feed topping, food or feed extender or feed or food supplement.

The invention is further illustrated by the following items:

1. A method for preparing a composition having antimicrobial activity, comprising the steps of

   (a) providing a spent fermentation broth from which microorganism has optionally been removed;
   (b) subjecting said spent fermentation broth to a temperature of at least 160°C for 1 second to 360 minutes at a pressure above 5 bar (0.5 MPa).

2. The method according to item 1, wherein the method further contains a step where solid material is separated from the material formed in step (b) and optionally concentrating the liquid phase thus obtained.
3. The method according to items 1 or 2, wherein said microorganisms are lipid producing or oleaginous microorganisms.
4. The method according to any of the preceding items, wherein said spent fermentation broth comprises a lignocellulose hydrolysate.
5. The method of according to any of the preceding items, wherein the thermally processed spent fermentation broth obtained in step (b) comprises polymerized sugars, sugar degradation compounds, aromatic compounds, monomerized phenolic compounds and/or Maillard reaction products.
6. The method of according to any of the preceding items, wherein the spent fermentation broth originates from the fermentation of microorganism belonging to the genera of *Rhodosporidium, Rhodotorula, Cryptococcus, Lipomyces, Saccharomyces, Aspergillus* or *Mortierella.*
7. The method of according to any of the preceding items, wherein the temperature of the thermal processing is from 160°C to 300°C.
8. The method of according to any of the preceding items, wherein the pressure of the thermal processing is from 5 bar (0.5 MPa) to 25 bar (2.5 MPa).

9. A composition having antimicrobial activity obtainable by the method according to any of items 1 to 8.
10. The composition having antimicrobial activity according to item 9 for use as an antibiotic, preferably an in-feed or in-food antibiotic.
11. The composition having antimicrobial activity for the use according to item 10, wherein the growth of pathogenic and/or unwanted bacteria belonging to the families of Enterobacteriaceae, homofermentative Lactobacillaceae, Campylobacteraceae or Clostridiaceae is inhibited and/or the growth of heterofermentative Lactobacillaceae is stimulated so that the lactic acid fermentation in the small intestine is shifted from homofermentative to heterofermentative.
12. Feed additive or food additive comprising the composition having antimicrobial activity according to item 9.
13. A feed or food product comprising the composition of the feed or food additive according to item 12.

The invention is further illustrated by the following non-limiting examples. The invention can be applicable to other unwanted microorganisms pathogens than those illustrated in examples. The invention can be applicable to compositions originating from other microorganisms than those illustrated in examples. It should be understood, however, that the embodiments given in the description above and in the examples are for illustrative purposes only, and that various changes and modifications are possible within the scope of invention.

**Examples**

**Materials and methods**

The selected bacteria were grown under anaerobic or microaerophilic conditions in the synthetic liquid growth media suitable for each bacterium. Growth kinetics was assessed before starting the experiments to ensure that the growth in the final test could be measured at the time points that represent approximately the late exponential/early stationary growth phase. This was the time point that provided widest dynamic range for the growth monitoring.

**Test bacteria**

The susceptibility of the following bacteria was tested:

<u>Pathogens</u>

1. *Salmonella enterica* (foodborne pathogen)
*2. Escherichia coli* (pathogenic strain F4+)
3. Clostridium perfringens (causative agent of necrotic enteritis)
*4. Campylobacter jejuni* (foodborne pathogen)

<u>Commensal bacteria</u>

*5. Lactobacillus reuteri* (heterofermentative lactic acid bacterium)
*6. Lactobacillus crispatus* (homofermentative lactic acid bacterium)
*7. Enterococcus faecium* (homofermentative lactic acid bacterium)
*8. Escherichia coli* (commensal strain)
9. Fresh digesta from chicken ileum ("ileal microbiota")

The first four species are pathogens for the production animal and/or for the consumer. Thus, their elimination is desired. Lactic acid producing bacteria *L. reuteri, L. crispatus* and *E. faecium* are often the most common commensal bacteria in the chicken small intestine, and, harmless *E.coli* strains also belong to the normal intestinal microbiota. Finally, an undefined mixed culture of chicken ileal bacteria was tested to see how the whole digestal bacterial community reacts to the test products. Growth promoting antibiotics have been targeted to reduce the total bacterial numbers in the ileum and thus promote growth of the host.

**Culture media**

*S. enterica* and both E. coli strains were grown in Tryptic Soy Broth (TSB) medium. For *E. faecium* TSB was supplied with yeast extract (TSY) and for *C. perfringens* TSB was supplied with glucose and yeast extract (TSGY). *L. crispatus, L. reuteri* and the undefined mixture of ileal bacteria were grown on de Man, Rogosa and Sharpe medium (MRS). *C. jejuni* was grown in Brain Heart Infusion (BHI) broth.

**Inoculation and growth conditions**

All pure bacterial cultures were inoculated with 1% inoculum whereas for ileal mixed culture 2.5% inoculum was used. *S. enterica* and both strains of E. coli were grown under aerobic conditions at 37°C for 5 h. *E. faecium, L. crispatus* and *L. reuteri* were grown under microaerophilic conditions at 37°C for 6 h. C. *perfringens* and ileal mixed culture were grown anaerobically at 37°C for 4 h. C. *jejuni* was grown under microaerophilic conditions at 42°C for 17h.

**Monitoring of growth**

The density of bacterial suspensions was measured at 0h and again after the time points indicated in the figures. The signal at 0h made it possible to estimate the strength of inoculum as compared to the growth in the end of the culturing. *C. jejuni* grows to lower turbidity than the other bacteria studied and the high doses of the test products as such tend to increase absorbance at 600 nm. For these reasons the turbidity of each culture vessel of *C. jejuni* was measured using the high speed supernatant (cells removed) of the same vessel as a blank.

Further, in some tests concerning *C. jejuni,* the bacterial density in the culture was measured by using SYBR Green, a fluorescing dye which binds to DNA in bacterial cells. The DNA-dye-complex absorbs blue light ($\lambda$max = 497 nm) and emits green light ($\lambda$max = 520 nm). The latter was quantified by a fluorometer. *C. jejuni* cultures were fixed with 8% glutardialdehyde and refrigerated overnight. 500 $\mu$l of bacterial suspension was centrifuged at 17 000 x g for 10 minutes, bacteria resuspended in TE buffer, centrifuged again and the pellet suspended in 125 $\mu$l of the buffer. The bacterial suspension was mixed 1:1 with 1:5000 diluted SYBR Green solution and the fluorescence was measured.

<u>Example 1: Preparation of test materials by thermally processing cultivation suspension from oleaginous yeast cultivation using lignocellulosic hydrolysate as substrate</u>

*Rhodosporidium toruloides* strain TKK12 (available from a recognized microbial culture collection) was grown under aeration in a pilot fermenter. Fermentation was done as fed-batch fermentation using lignocellulosic hydrolysate syrup as the carbon source. After 12 h batch fermentation lignocellulose hydrolysate syrup was added to the fermenter periodically during the 144 h cultivation. Growth medium was supplemented with yeast extract (17 g/l), $(NH_4)_2SO_4$ (2,1 g/l), $(NH_4)_2HPO_4$ (2.1 g/l) $MgCl_2$ (3.3 g/l), $K_2HPO_4$ (5 g/l) and $CaCl_2$ (0,2 g/l) and trace minerals $ZnSO_4$ (0,0005 g/l), CuCl (0.0003 g/l) and $MnCl_2$ (0.05 g/l).

After the cultivation of this oleaginous yeast, part of the biomass suspension was centrifuged to remove biomass and obtain a liquid phase. Part of this liquid phase with a dry matter content of 8.87 % was evaporated under vacuum at 50°C to obtain a sludge with a dry matter content of 53.50 %. This sludge was diluted with ion-exchanged water to yield liquid with a dry matter content of 18.53 %. This non-thermally processed material was further used in microbial inhibition tests described in Example 2 and named in here material A (comparative material).

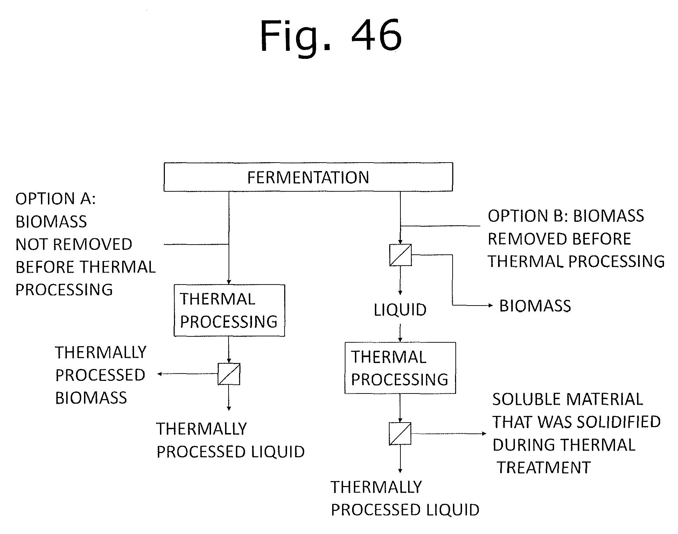

In addition, part of the liquid separated after the cultivation by centrifugation was thermally processed by heating this liquid phase that did not contain biomass to 180 °C for 1 hour in a pressure reactor. After the thermal processing the solid material formed during the thermal processing from the dissolved material in the treated liquid phase was removed by filtration. This thermally processed liquid phase with a dry matter content of 10.05 % was then evaporated under vacuum at 50°C to obtain sludge with a dry matter content of 75.87 %. This sludge was diluted with ion-exchanged water to yield liquid with a dry matter content of 18,98 %. This material was further used in microbial inhibition tests described in example 3 and named in there material C (material obtained by the process according to "OPTION B", see Fig. 46).

The rest of the biomass suspension from the cultivation was thermally processed at 180 °C for 1 hour in pilot-scale pressure reactor. After thermal processing, the biomass was removed by filtration and the liquid phase with a dry matter content of 8.87 % was evaporated under vacuum at 50°C to obtain sludge with a dry matter content of 73.59 %. This sludge was diluted with ion-exchanged water to yield a liquid with a dry matter content of 13.30 % and was further used in microbial inhibition tests described in Example 2 and named in here material B (material obtained by the process according to "OPTION A", see Fig. 46).

Example 2: Microbial inhibition tests using test materials A and B produced in Example 1

The test materials produced in Example 1 were further diluted for the microbial inhibition test. The actual dry matter content originating from the test material in each individual test is presented in the table below.

| Material | Dry matter of test material, % | Dilutions in tests (for products A and C 0,1 , 1, 5, 10 %; for product B 1, 5, 10 %) / Actual test material originating dry matter |
|---|---|---|
| Control | 0 | 0 |
| A | 18.53 | 0.019 - 1.853 % |
| B | 13.30 | 0.013 - 1.330 % |

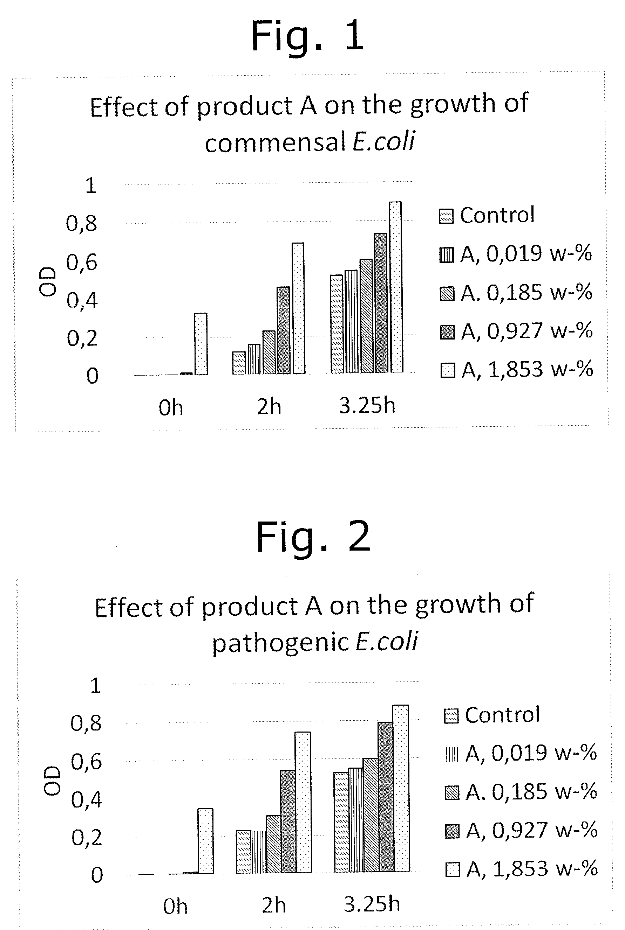

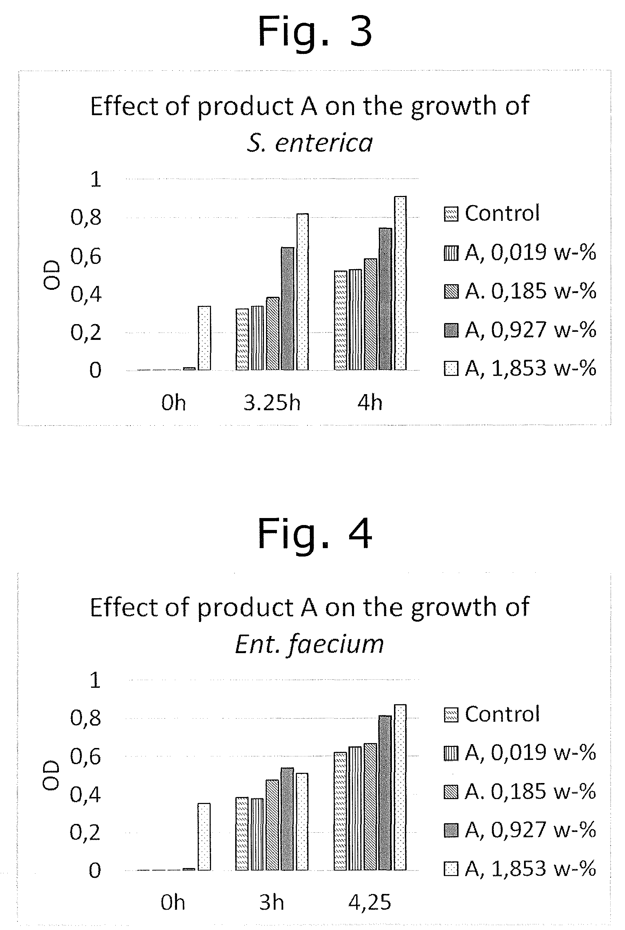

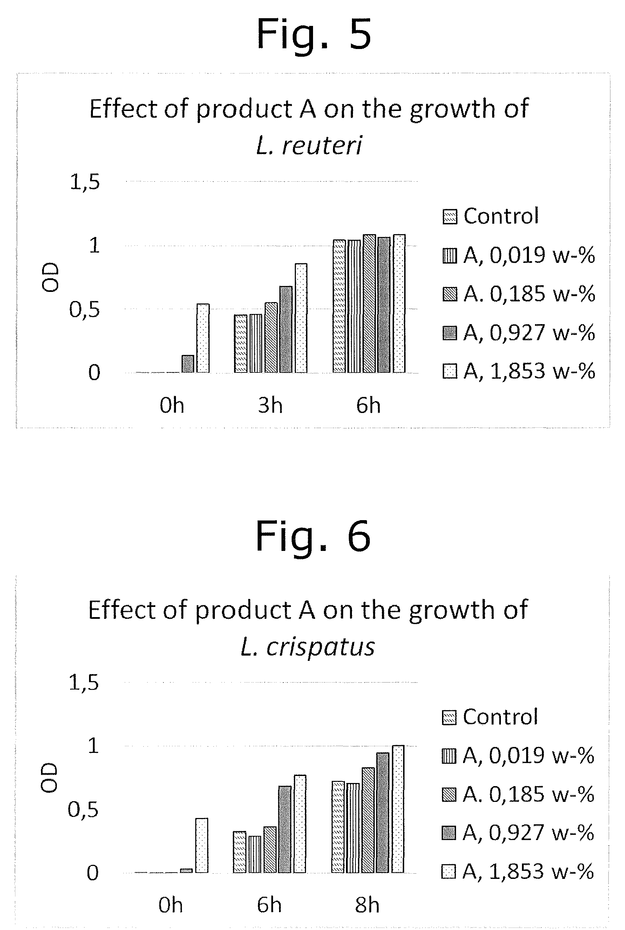

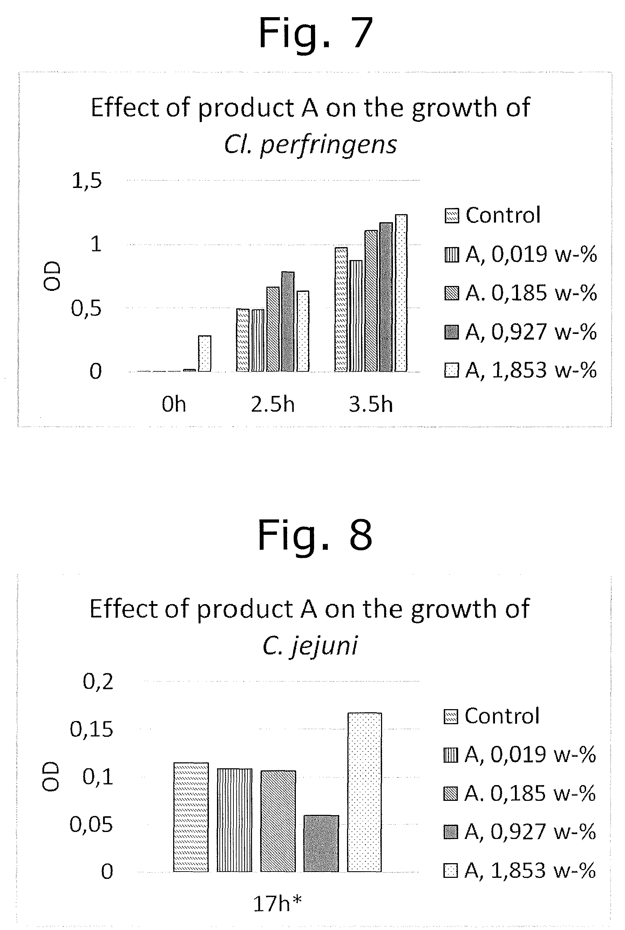

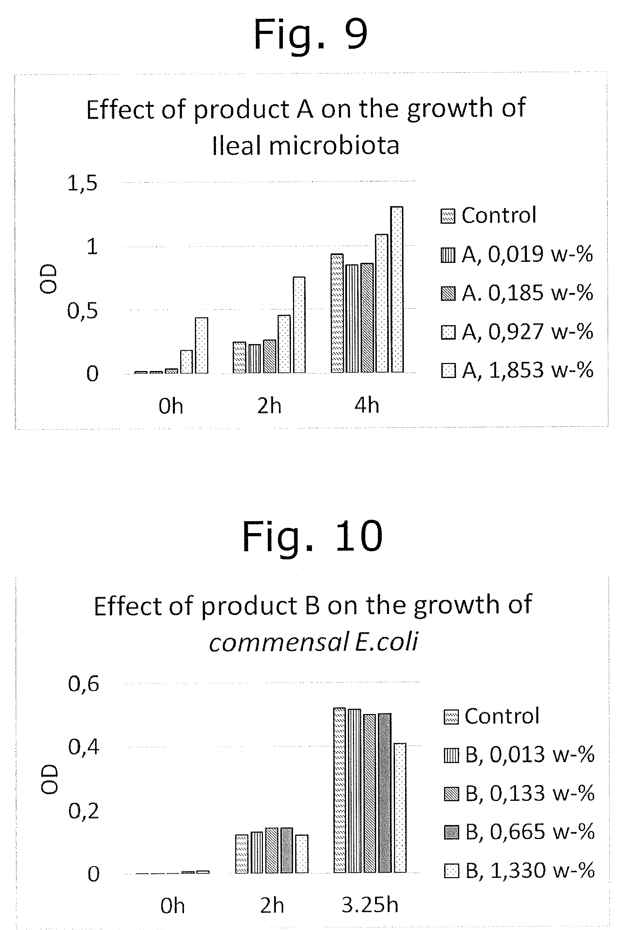

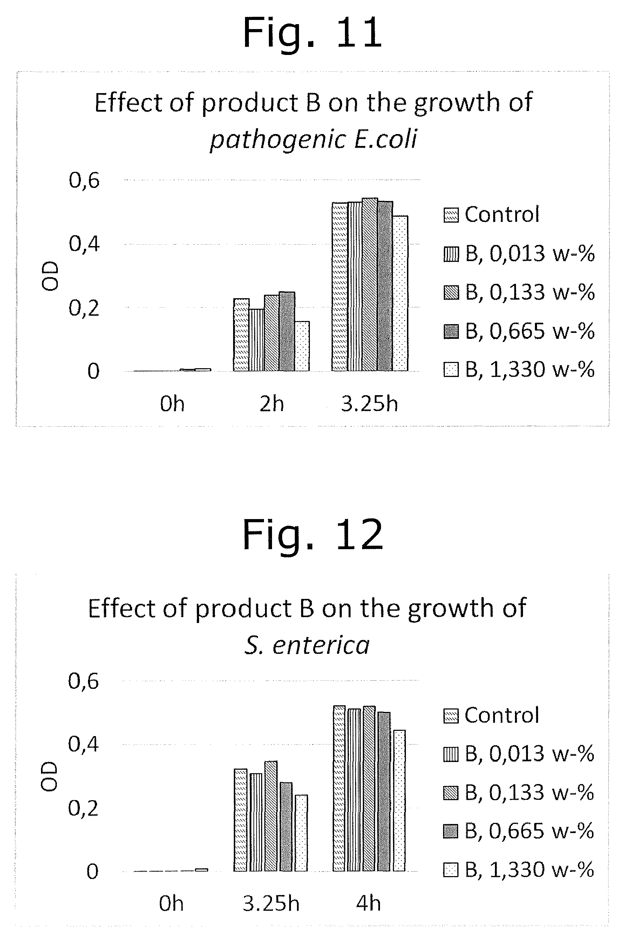

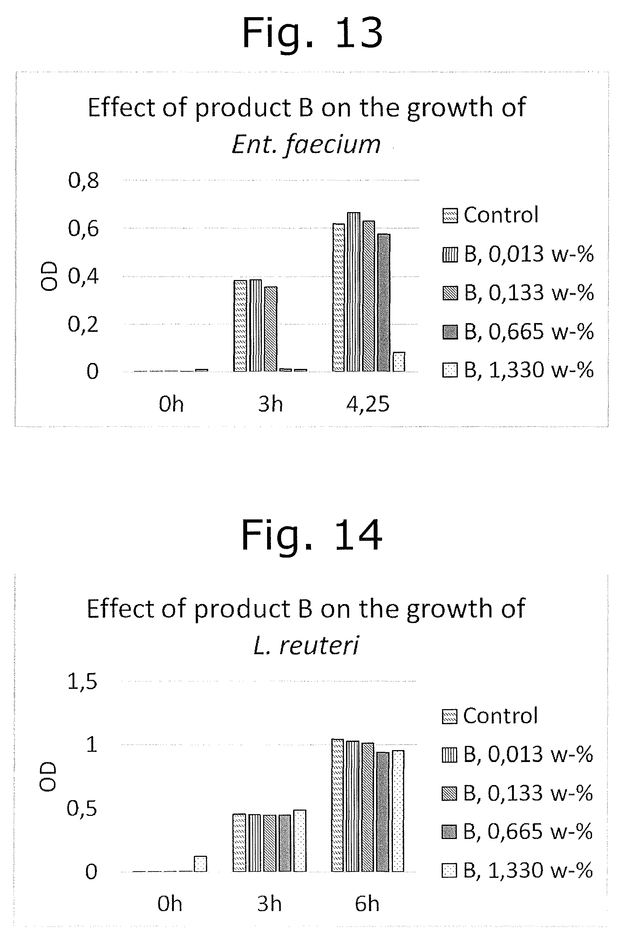

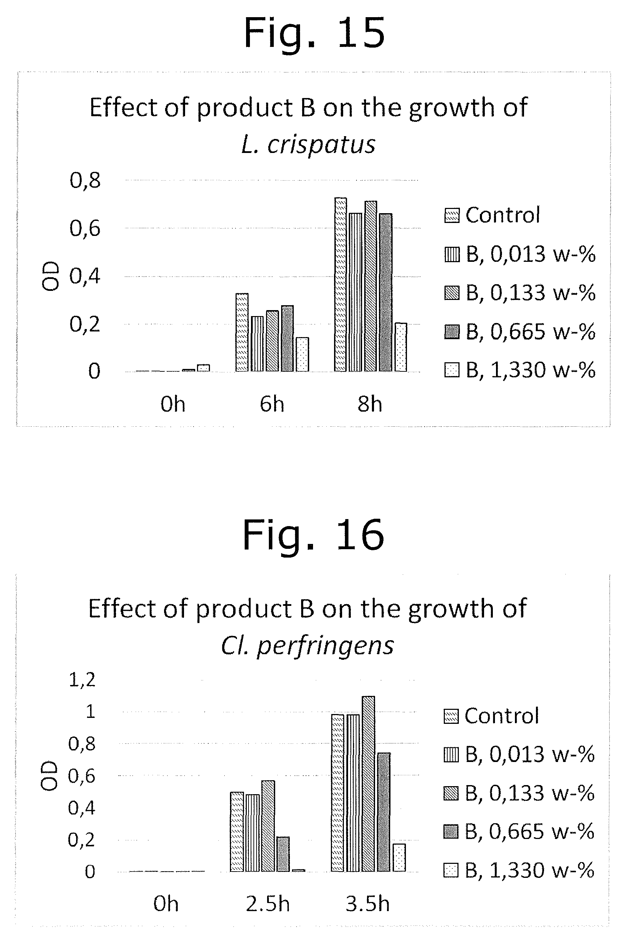

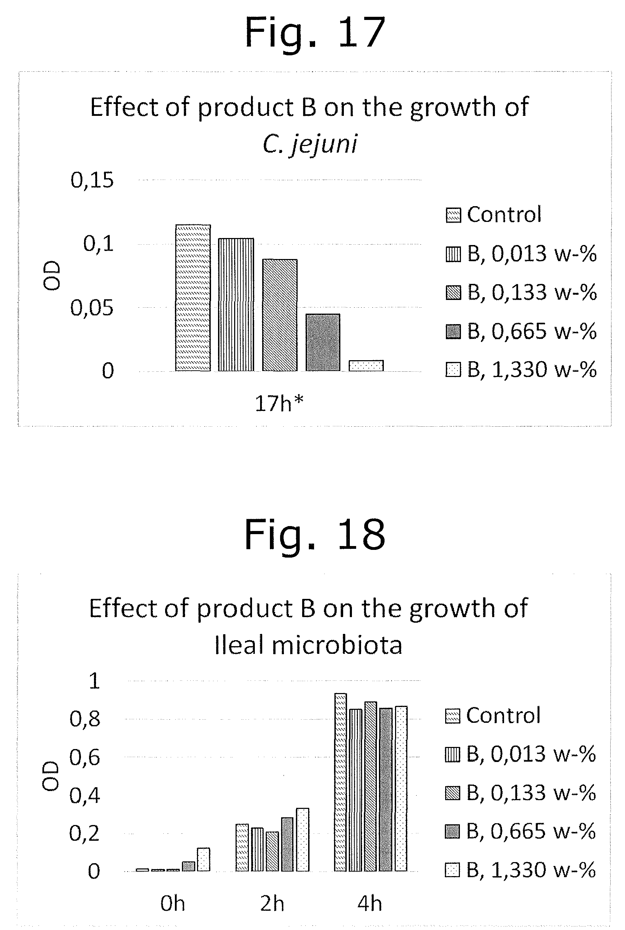

The results of this example are illustrated in Figs. 1 to 18, where the dry matter content of the products used in each experiment is indicated (w-%).

Example 3: Microbial inhibition tests using test material C produced in Example 1

The test material produced in Example 1 was further diluted for the microbial inhibition test. The actual dry matter content originating from the test material in each individual test is presented in the table below

| Material | Dry matter of test material, % | Dilutions in tests (for products A and C 0.1 , 1, 5, 10 %; for product B 1, 5, 10 %) / Actual test material originating dry matter |
|---|---|---|
| Control | 0 | 0 |
| C | 18.98 | 0.19 - 1.9% |

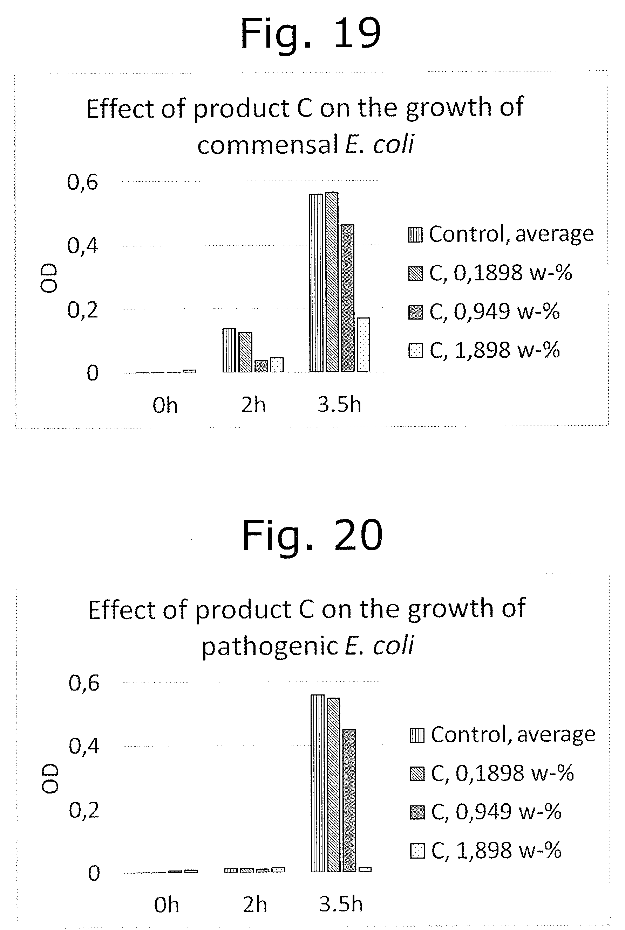

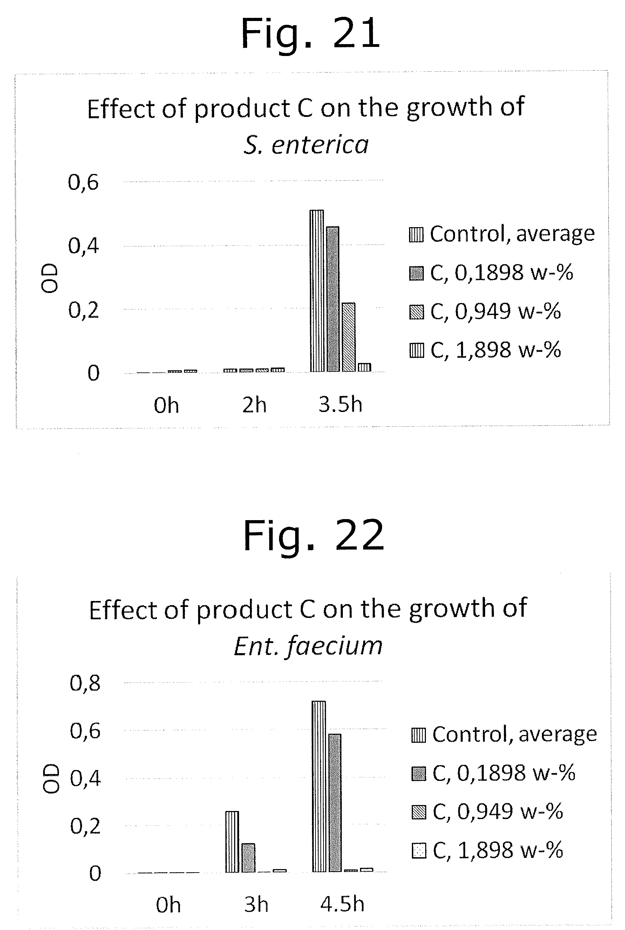

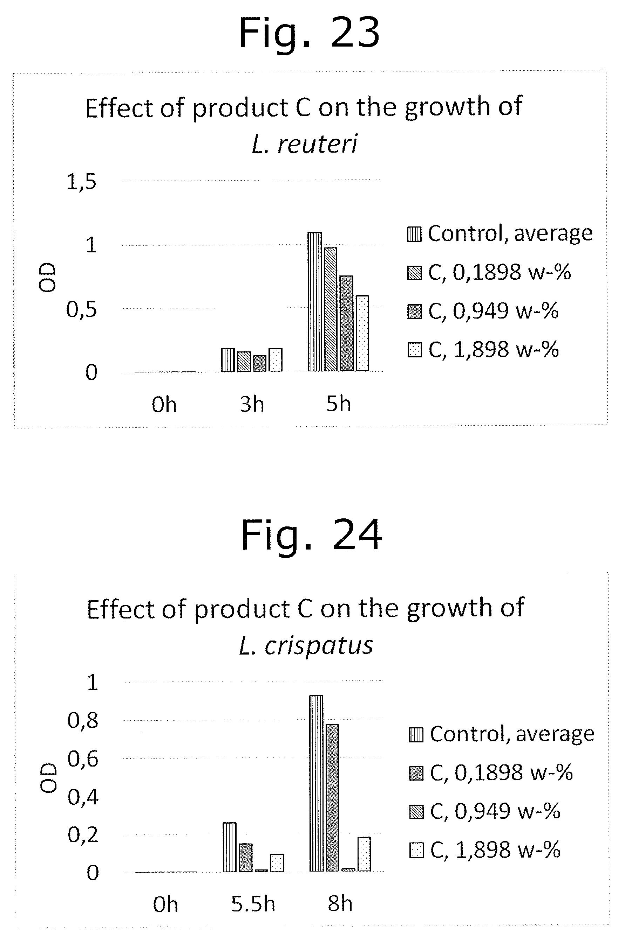

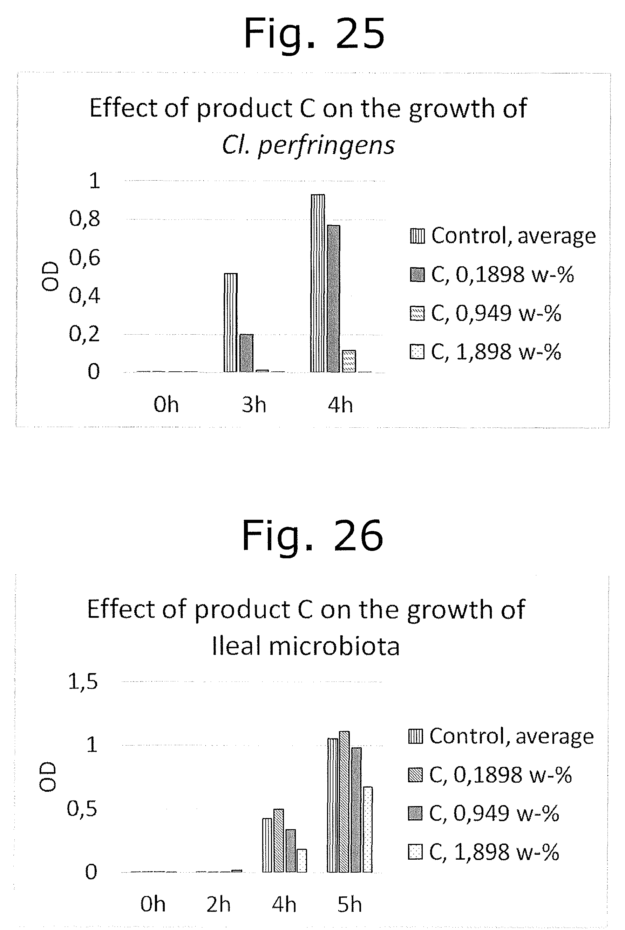

The results of this example are illustrated in Figs. 19 to 27, where the dry matter content of the product used in each experiment is indicated (w-%).

Example 4: Preparation of test materials by thermally processing liquid from oleaginous yeast cultivation using pure glucose as substrate

*Rhodosporidium toruloides* strain C-71034 (available from a recognized microbial culture collection) was grown under aeration in a pilot fermenter. Fermentation was done as fed-batch fermentation using glucose as carbon source. After 6 h batch phase glucose syrup was added to the fermenter periodically during the 167 h cultivation. Growth medium was supplemented with yeast extract (10 g/l), $(NH_4)_2HPO_4$ (1.5 g/l), $(NH_4)_2SO_4$ (1.5 g/l), $MgCl_2$ (1.8 g/l), $K_2HPO_4$ (1 g/l), $KH_2PO_4$ (3 g/l) and $CaCl_2$ (0.4 g/l) and trace minerals $ZnSO_4$ (0.001 g/l), CuCl (0.001 g/l), $MnCl_2$ (0.05 g/l), $NiSO_4$ x 6 $H_2O$ (0.001 g/l), $Na_2MoO_4$ (0.0001 g/l).

After the cultivation of this oleaginous yeast, part of the biomass suspension was centrifuged to remove biomass and obtain a liquid phase with a dry matter content of 4.89 %. The liquid phase was evaporated under vacuum at 50°C to obtain sludge with a dry matter content of 78.61 %. This sludge was diluted with ion-exchanged water to yield a liquid with a dry matter content of 3.83 %. This material was further used in microbial inhibition tests described in example 5 and named in here material D (material obtained by the process according to "OPTION B", see Fig. 46).

In addition, part of the biomass suspension from fermentation was thermally processed by heating it to 180°C for 1 hour in a pressure reactor. After the thermal processing, the content of the reactor was filtrated to remove any solid material. Liquid phase with a dry matter content of 4.30 % was then evaporated under vacuum to obtain a sludge with a dry matter content of 44.96 %. This sludge was diluted with ion-exchanged water to yield a liquid with a dry matter content of 12.43 %. This material was further used in microbial inhibition tests described in example 5 and named in here material E (material obtained by the process according to "OPTION A", see Fig. 46).

Example 5: Microbial inhibition tests using test materials D and E produced in Example 4

The test materials produced in Example 4 were further diluted for the microbial inhibition test. The actual dry matter content originating from the test material in each individual test is presented in the table below.

| Material | Dry matter of test material | Dilutions in tests (1, 5, 10 %); Actual dry matter |
|---|---|---|
| Control | 0 | 0 |
| D | 3.83 | 0.03 - 0.3 % |
| E | 12.43 | 0.12 - 1.2 % |

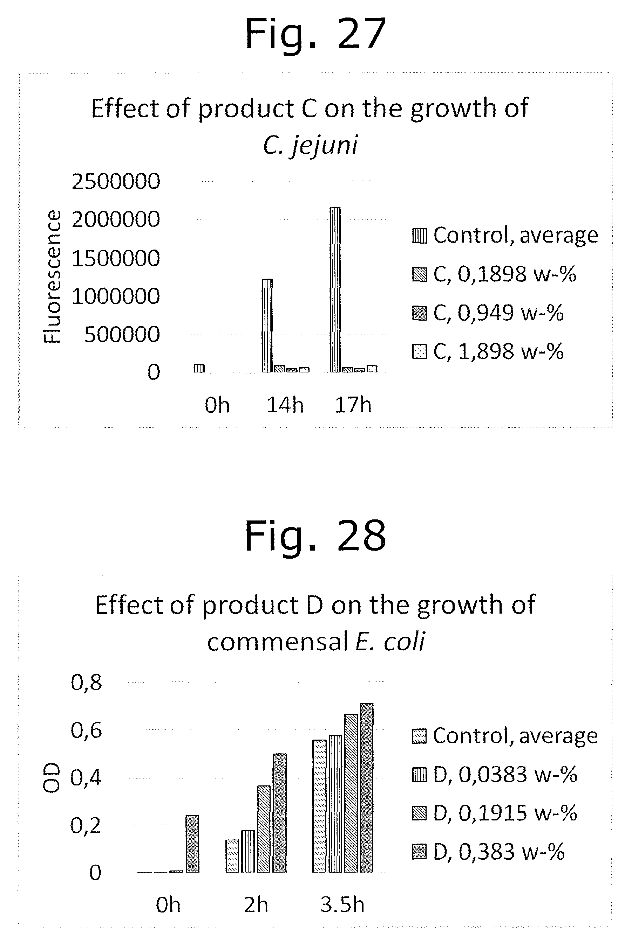

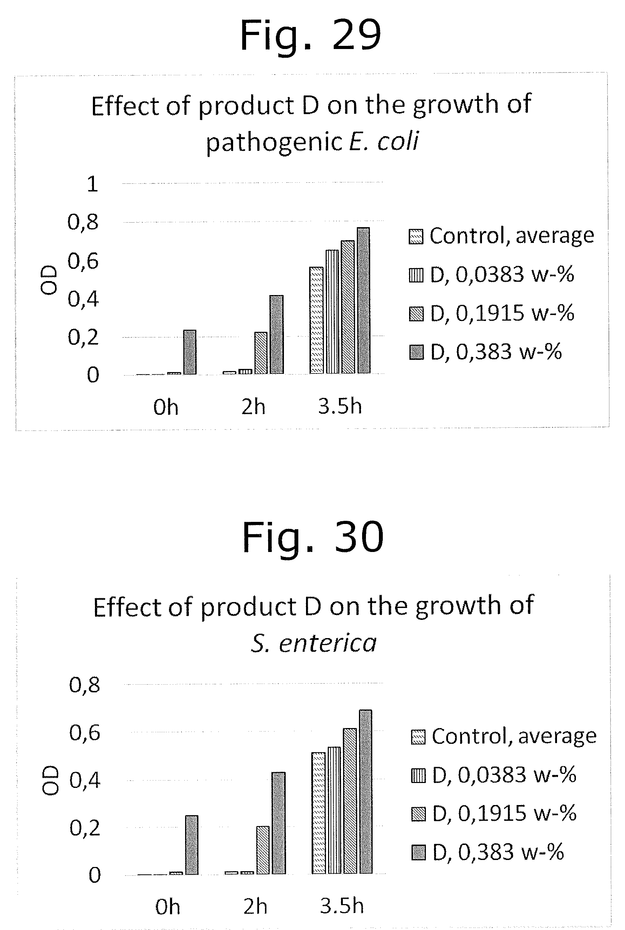

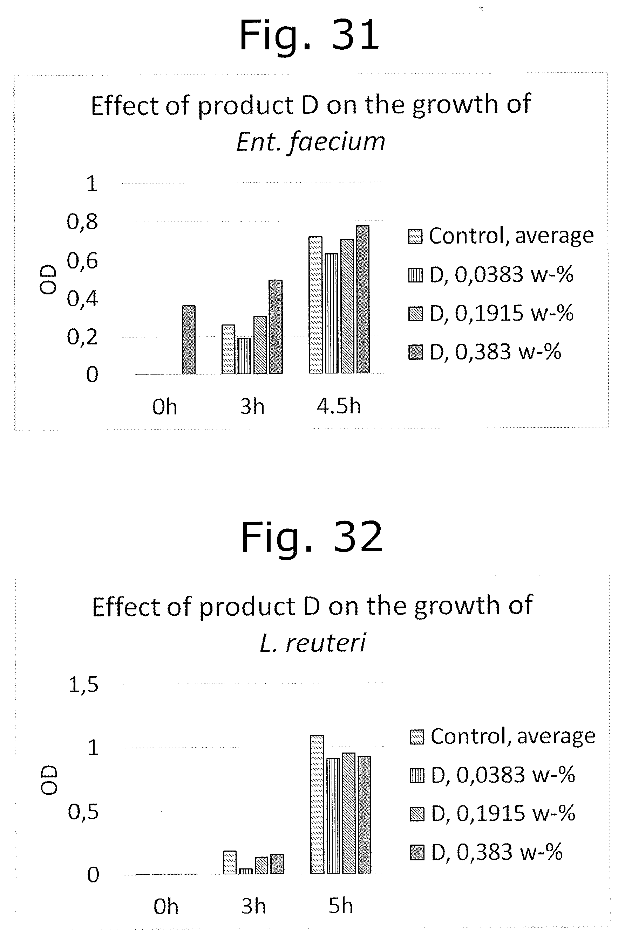

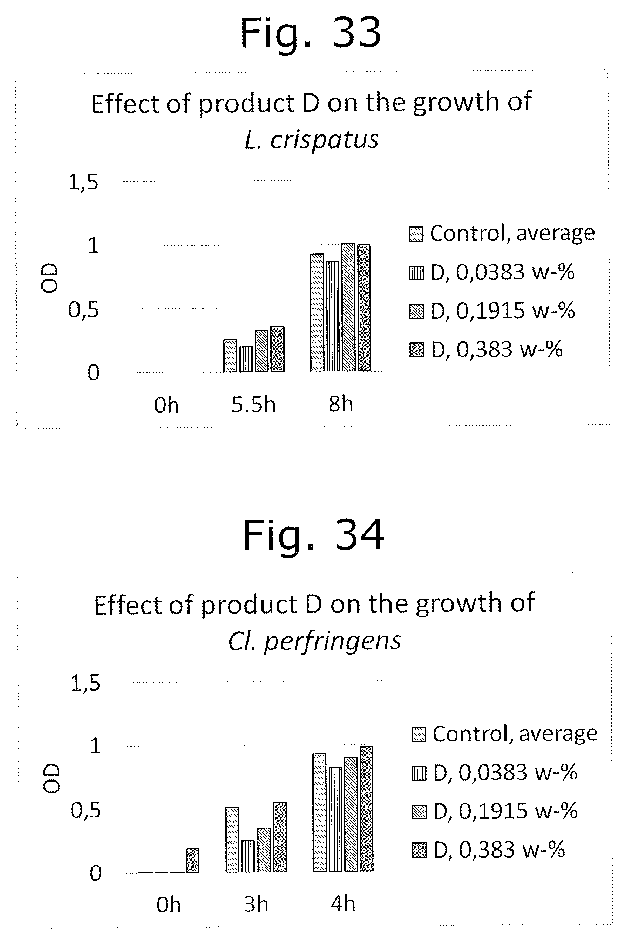

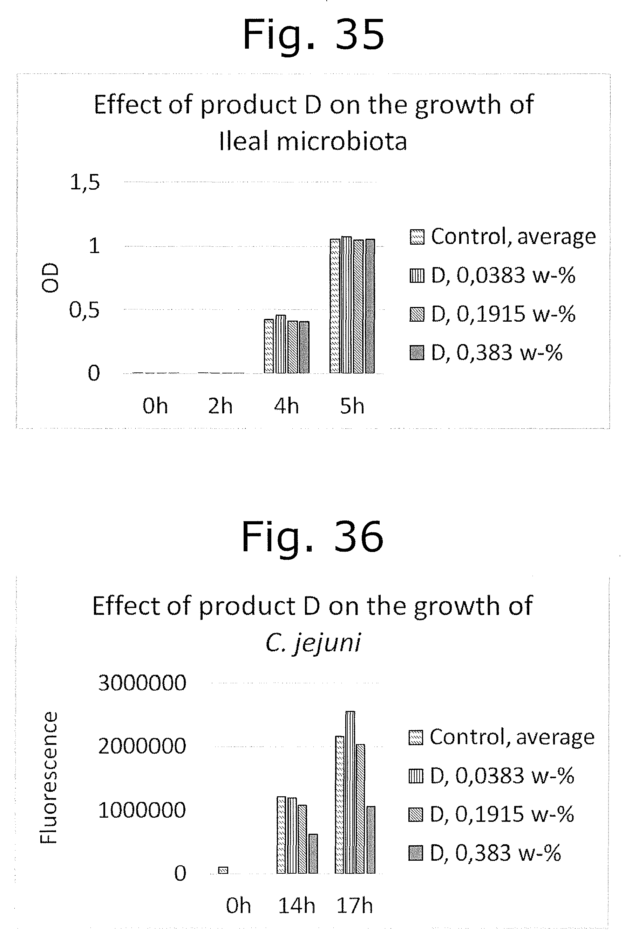

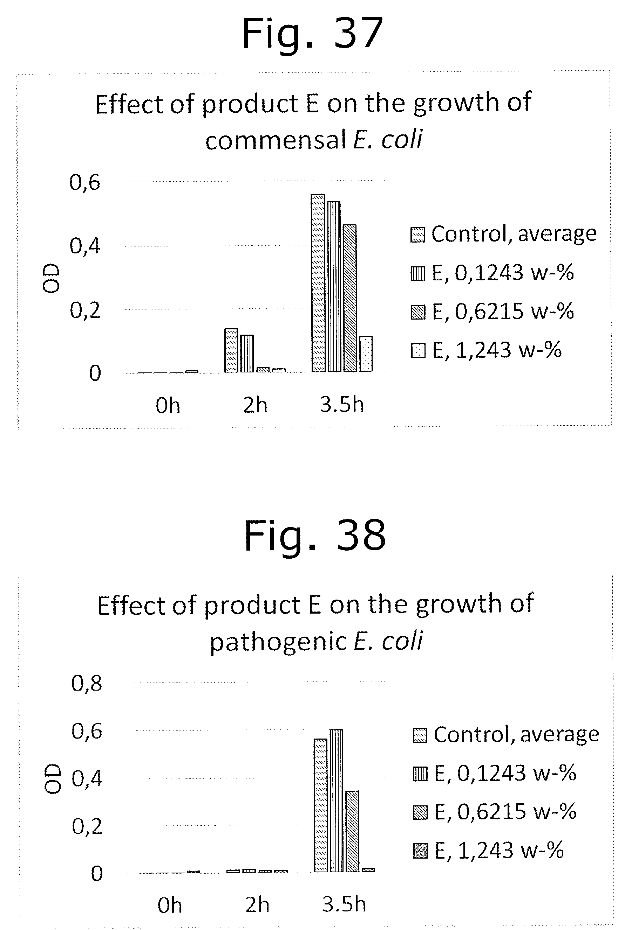

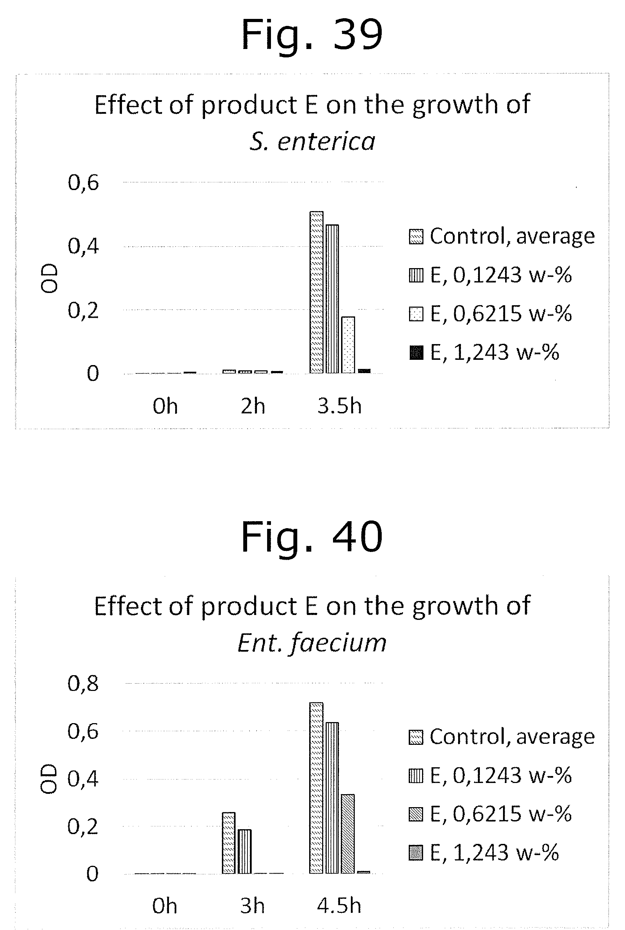

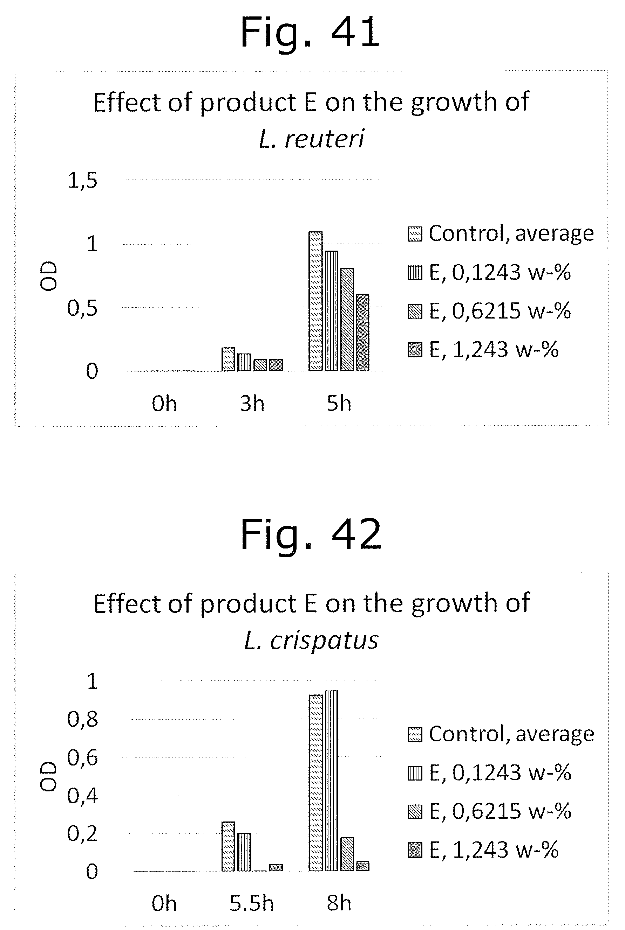

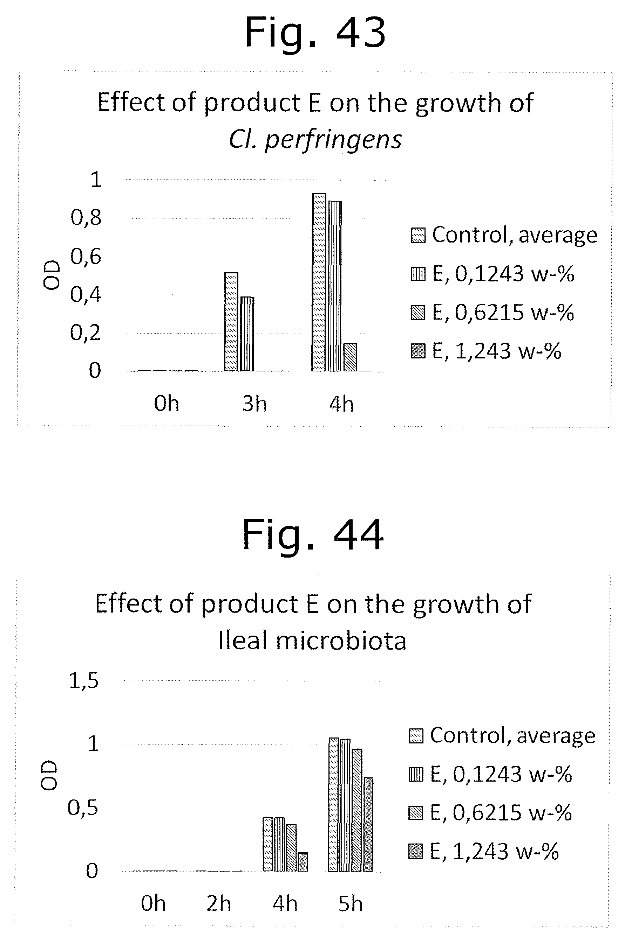

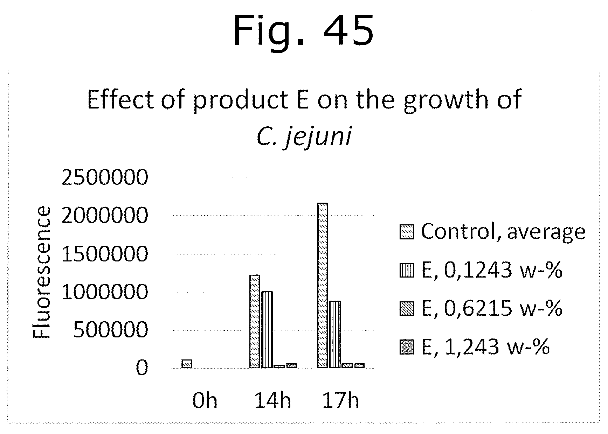

The results of this example are illustrated in Figs. 28 to 45, where the dry matter content of the products used in each experiment is indicated (w-%).

**Claims**

**1.** A method for preparing a composition having antimicrobial activity, comprising the steps of

(a) providing a spent fermentation broth from which microorganism has optionally been removed;
(b) subjecting said spent fermentation broth to a temperature of at least 160°C for 1 second to 360 minutes at a pressure above 5 bar (0.5 MPa).

**2.** The method according to claim 1, wherein the method further contains a step where solid material is separated from the material formed in step (b) and optionally concentrating the liquid phase thus obtained.

**3.** The method according to any of the preceding claims, wherein said microorganisms are lipid producing or oleaginous microorganisms.

**4.** The method according to any of the preceding claims, wherein said spent fermentation broth comprises a lignocellulose hydrolysate.

**5.** The method of according to any of the preceding claims, wherein the thermally processed spent fermentation broth obtained in step (b) comprises polymerized sugars, sugar degradation compounds, aromatic compounds, monomerized phenolic compounds and/or Maillard reaction products.

**6.** The method of according to any of the preceding claims, wherein the spent fermentation broth originates from the fermentation of microorganism belonging to the genera of *Rhodosporidium, Rhodotorula, Cryptococcus, Lipomyces, Saccharomyces, Aspergillus* or *Mortierella.*

**7.** The method of according to any of the preceding claims, wherein the temperature of the thermal processing is from 160°C to 300°C.

**8.** The method of according to any of the preceding claims, wherein the pressure of the thermal processing is from 5 bar (0.5 MPa) to 25 bar (2.5 MPa).

**9.** A composition having antimicrobial activity obtainable by the method according to any of claims 1 to 8.

**10.** The composition having antimicrobial activity according to claim 9 for use as an antibiotic, preferably an in-feed or in-food antibiotic.

**11.** The composition having antimicrobial activity for the use according to claim 10, wherein the growth of pathogenic and/or unwanted bacteria belonging to the families of Enterobacteriaceae, homofermentative Lactobacillaceae, Campylobacteraceae or Clostridiaceae is inhibited and/or the growth of heterofermentative Lactobacillaceae is stimulated so that the lactic acid fermentation in the small intestine is shifted from homofermentative to heterofermentative.

**12.** Feed additive or food additive comprising the composition having antimicrobial activity according to claim 9.

**13.** A feed or food product comprising the composition of the feed or food additive according to claim 12.

# Fig. 1

Effect of product A on the growth of commensal E.coli
1
0,8
0,6
0,4
0,2
0
OD
0h
2h
3.25h
Control
A, 0,019 w-%
A. 0,185 w-%
A, 0,927 w-%
A, 1,853 w-%

# Fig. 2

Effect of product A on the growth of pathogenic E.coli
1
0,8
0,6
0,4
0,2
0
OD
0h
2h
3.25h
Control
A, 0,019 w-%
A. 0,185 w-%
A, 0,927 w-%
A, 1,853 w-%

# Fig. 3

Effect of product A on the growth of
*S. enterica*
OD
1
0,8
0,6
0,4
0,2
0
0h
3.25h
4h
Control
A, 0,019 w-%
A. 0,185 w-%
A, 0,927 w-%
A, 1,853 w-%

# Fig. 4

Effect of product A on the growth of
*Ent. faecium*
OD
1
0,8
0,6
0,4
0,2
0
0h
3h
4,25
Control
A, 0,019 w-%
A. 0,185 w-%
A, 0,927 w-%
A, 1,853 w-%

# Fig. 5

Effect of product A on the growth of
*L. reuteri*
OD
1,5
1
0,5
0
0h
3h
6h
Control
A, 0,019 w-%
A. 0,185 w-%
A, 0,927 w-%
A, 1,853 w-%

# Fig. 6

Effect of product A on the growth of
*L. crispatus*
OD
1,5
1
0,5
0
0h
6h
8h
Control
A, 0,019 w-%
A. 0,185 w-%
A, 0,927 w-%
A, 1,853 w-%

# Fig. 7

Effect of product A on the growth of
*Cl. perfringens*
1,5
1
0,5
0
OD
0h
2.5h
3.5h
Control
A, 0,019 w-%
A. 0,185 w-%
A, 0,927 w-%
A, 1,853 w-%

# Fig. 8

Effect of product A on the growth of
*C. jejuni*
0,2
0,15
0,1
0,05
0
OD
17h*
Control
A, 0,019 w-%
A. 0,185 w-%
A, 0,927 w-%
A, 1,853 w-%

# Fig. 9

Effect of product A on the growth of Ileal microbiota
1,5
1
0,5
0
OD
0h
2h
4h
Control
A, 0,019 w-%
A. 0,185 w-%
A, 0,927 w-%
A, 1,853 w-%

# Fig. 10

Effect of product B on the growth of *commensal E.coli*
0,6
0,4
0,2
0
OD
0h
2h
3.25h
Control
B, 0,013 w-%
B, 0,133 w-%
B, 0,665 w-%
B, 1,330 w-%

# Fig. 11

Effect of product B on the growth of
pathogenic E.coli
0,6
0,4
0,2
0
OD
0h
2h
3.25h
Control
B, 0,013 w-%
B, 0,133 w-%
B, 0,665 w-%
B, 1,330 w-%

# Fig. 12

Effect of product B on the growth of
S. enterica
0,6
0,4
0,2
0
OD
0h
3.25h
4h
Control
B, 0,013 w-%
B, 0,133 w-%
B, 0,665 w-%
B, 1,330 w-%

# Fig. 13

Effect of product B on the growth of
Ent. faecium
0,8
0,6
0,4
0,2
0
OD
0h
3h
4,25
Control
B, 0,013 w-%
B, 0,133 w-%
B, 0,665 w-%
B, 1,330 w-%

# Fig. 14

Effect of product B on the growth of
L. reuteri
1,5
1
0,5
0
OD
0h
3h
6h
Control
B, 0,013 w-%
B, 0,133 w-%
B, 0,665 w-%
B, 1,330 w-%

# Fig. 15

Effect of product B on the growth of
L. crispatus
OD
0,8
0,6
0,4
0,2
0
0h
6h
8h
Control
B, 0,013 w-%
B, 0,133 w-%
B, 0,665 w-%
B, 1,330 w-%

# Fig. 16

Effect of product B on the growth of
Cl. perfringens
OD
1,2
1
0,8
0,6
0,4
0,2
0
0h
2.5h
3.5h
Control
B, 0,013 w-%
B, 0,133 w-%
B, 0,665 w-%
B, 1,330 w-%

# Fig. 17

Effect of product B on the growth of
C. jejuni
0,15
0,1
0,05
0
OD
17h*
Control
B, 0,013 w-%
B, 0,133 w-%
B, 0,665 w-%
B, 1,330 w-%

# Fig. 18

Effect of product B on the growth of
Ileal microbiota
1
0,8
0,6
0,4
0,2
0
OD
0h
2h
4h
Control
B, 0,013 w-%
B, 0,133 w-%
B, 0,665 w-%
B, 1,330 w-%

# Fig. 19

Effect of product C on the growth of commensal E. coli
0,6
0,4
0,2
0
OD
0h
2h
3.5h
Control, average
C, 0,1898 w-%
C, 0,949 w-%
C, 1,898 w-%

# Fig. 20

Effect of product C on the growth of pathogenic E. coli
0,6
0,4
0,2
0
OD
0h
2h
3.5h
Control, average
C, 0,1898 w-%
C, 0,949 w-%
C, 1,898 w-%

# Fig. 21

Effect of product C on the growth of
*S. enterica*
0,6
0,4
0,2
0
OD
0h
2h
3.5h
Control, average
C, 0,1898 w-%
C, 0,949 w-%
C, 1,898 w-%

# Fig. 22

Effect of product C on the growth of
*Ent. faecium*
0,8
0,6
0,4
0,2
0
OD
0h
3h
4.5h
Control, average
C, 0,1898 w-%
C, 0,949 w-%
C, 1,898 w-%

Fig. 23

Effect of product C on the growth of
L. reuteri
1,5
1
0,5
0
OD
0h
3h
5h
Control, average
C, 0,1898 w-%
C, 0,949 w-%
C, 1,898 w-%

Fig. 24

Effect of product C on the growth of
L. crispatus
1
0,8
0,6
0,4
0,2
0
OD
0h
5.5h
8h
Control, average
C, 0,1898 w-%
C, 0,949 w-%
C, 1,898 w-%

Fig. 25

Effect of product C on the growth of
Cl. perfringens
1
0,8
0,6
0,4
0,2
0
OD
0h
3h
4h
Control, average
C, 0,1898 w-%
C, 0,949 w-%
C, 1,898 w-%

Fig. 26

Effect of product C on the growth of
Ileal microbiota
1,5
1
0,5
0
OD
0h
2h
4h
5h
Control, average
C, 0,1898 w-%
C, 0,949 w-%
C, 1,898 w-%

# Fig. 27

Effect of product C on the growth of
*C. jejuni*
Fluorescence
2500000
2000000
1500000
1000000
500000
0
0h
14h
17h
Control, average
C, 0,1898 w-%
C, 0,949 w-%
C, 1,898 w-%

# Fig. 28

Effect of product D on the growth of
commensal *E. coli*
OD
0,8
0,6
0,4
0,2
0
0h
2h
3.5h
Control, average
D, 0,0383 w-%
D, 0,1915 w-%
D, 0,383 w-%

# Fig. 29

Effect of product D on the growth of pathogenic *E. coli*
1
0,8
0,6
0,4
0,2
0
OD
0h
2h
3.5h
Control, average
D, 0,0383 w-%
D, 0,1915 w-%
D, 0,383 w-%

# Fig. 30

Effect of product D on the growth of *S. enterica*
0,8
0,6
0,4
0,2
0
OD
0h
2h
3.5h
Control, average
D, 0,0383 w-%
D, 0,1915 w-%
D, 0,383 w-%

# Fig. 31

Effect of product D on the growth of
*Ent. faecium*
1
0,8
0,6
0,4
0,2
0
OD
0h
3h
4.5h
Control, average
D, 0,0383 w-%
D, 0,1915 w-%
D, 0,383 w-%

# Fig. 32

Effect of product D on the growth of
*L. reuteri*
1,5
1
0,5
0
OD
0h
3h
5h
Control, average
D, 0,0383 w-%
D, 0,1915 w-%
D, 0,383 w-%

# Fig. 33

Effect of product D on the growth of
*L. crispatus*
1,5
1
0,5
0
OD
0h
5.5h
8h
Control, average
D, 0,0383 w-%
D, 0,1915 w-%
D, 0,383 w-%

# Fig. 34

Effect of product D on the growth of
*Cl. perfringens*
1,5
1
0,5
0
OD
0h
3h
4h
Control, average
D, 0,0383 w-%
D, 0,1915 w-%
D, 0,383 w-%

# Fig. 35

Effect of product D on the growth of Ileal microbiota
1,5
1
0,5
0
OD
0h
2h
4h
5h
Control, average
D, 0,0383 w-%
D, 0,1915 w-%
D, 0,383 w-%

# Fig. 36

Effect of product D on the growth of *C. jejuni*
3000000
2000000
1000000
0
Fluorescence
0h
14h
17h
Control, average
D, 0,0383 w-%
D, 0,1915 w-%
D, 0,383 w-%

Fig. 37

Effect of product E on the growth of commensal *E. coli*
0,6
0,4
0,2
0
OD
0h
2h
3.5h
Control, average
E, 0,1243 w-%
E, 0,6215 w-%
E, 1,243 w-%

Fig. 38

Effect of product E on the growth of pathogenic *E. coli*
0,8
0,6
0,4
0,2
0
OD
0h
2h
3.5h
Control, average
E, 0,1243 w-%
E, 0,6215 w-%
E, 1,243 w-%

# Fig. 39

Effect of product E on the growth of
S. enterica
0,6
0,4
0,2
0
OD
0h
2h
3.5h
Control, average
E, 0,1243 w-%
E, 0,6215 w-%
E, 1,243 w-%

# Fig. 40

Effect of product E on the growth of
Ent. faecium
0,8
0,6
0,4
0,2
0
OD
0h
3h
4.5h
Control, average
E, 0,1243 w-%
E, 0,6215 w-%
E, 1,243 w-%

Fig. 41

Effect of product E on the growth of
L. reuteri
1,5
1
0,5
0
OD
0h
3h
5h
Control, average
E, 0,1243 w-%
E, 0,6215 w-%
E, 1,243 w-%

Fig. 42

Effect of product E on the growth of
L. crispatus
1
0,8
0,6
0,4
0,2
0
OD
0h
5.5h
8h
Control, average
E, 0,1243 w-%
E, 0,6215 w-%
E, 1,243 w-%

Fig. 43

Effect of product E on the growth of
*Cl. perfringens*
1
0,8
0,6
0,4
0,2
0
OD
0h
3h
4h
Control, average
E, 0,1243 w-%
E, 0,6215 w-%
E, 1,243 w-%

Fig. 44

Effect of product E on the growth of
Ileal microbiota
1,5
1
0,5
0
OD
0h
2h
4h
5h
Control, average
E, 0,1243 w-%
E, 0,6215 w-%
E, 1,243 w-%

Fig. 45

Effect of product E on the growth of
*C. jejuni*
2500000
2000000
1500000
1000000
500000
0
Fluorescence
0h
14h
17h
Control, average
E, 0,1243 w-%
E, 0,6215 w-%
E, 1,243 w-%

# Fig. 46

FERMENTATION
OPTION A: BIOMASS NOT REMOVED BEFORE THERMAL PROCESSING
OPTION B: BIOMASS REMOVED BEFORE THERMAL PROCESSING
THERMAL PROCESSING
LIQUID
BIOMASS
THERMALLY PROCESSED BIOMASS
THERMAL PROCESSING
THERMALLY PROCESSED LIQUID
SOLUBLE MATERIAL THAT WAS SOLIDIFIED DURING THERMAL TREATMENT
THERMALLY PROCESSED LIQUID

Europäisches Patentamt
European Patent Office
Office européen des brevets

# EUROPEAN SEARCH REPORT

Application Number
EP 15 20 0509

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE BIOSIS [Online] BIOSCIENCES INFORMATION SERVICE, PHILADELPHIA, PA, US; 31 December 1988 (1988-12-31), FERREIRA C L ET AL: "BACTERIOCIN INVOLVED IN PREMATURE DEATH OF LACTOBACILLUS-ACIDOPHILUS NCFM DURING GROWTH AT PH 6", XP002757983, Database accession no. PREV198885110263 * abstract * | 1-13 | INV. A23K10/00 A23K10/12 A23K50/00 A23L5/00 |
| X | WO 2013/153070 A1 (CHR HANSEN AS [DK]) 17 October 2013 (2013-10-17) * examples 2-4; claims 1-16 * | 1-13 | |
| X | WO 2015/095462 A1 (BP BIOFUELS UK LTD [GB]; APT KIRK [US]; BARCLAY WILLIAM [US]; BLAZER M) 25 June 2015 (2015-06-25) * claims 1-70 * | 1-13 | |
| X | JEONG-WEON KIM ET AL: "Antimicrobial effect of Bifidobacteriumbreve and Bifidobacteriuminfantis against Salmonella Typhimurium KCTC 1925 and E.coli O157:H7 ATCC 43895", FOOD SCIENCE AND BIOTECHNOLOGY, THE KOREA SOC. OF FOOD SCIENCE AND TECHNOLOGY, HEIDELBERG, vol. 11, no. 1, 1 January 2002 (2002-01-01), pages 89-92, XP008145403, ISSN: 1226-7708 * the whole document * | 1-13 | TECHNICAL FIELDS SEARCHED (IPC): A23L A23K |

The present search report has been drawn up for all claims

| Place of search | Date of completion of the search | Examiner |
|---|---|---|
| Munich | 24 May 2016 | Georgopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 20 0509

This annex lists the patent family members relating to the patent documents cited in the above-mentioned European search report. The members are as contained in the European Patent Office EDP file on
The European Patent Office is in no way liable for these particulars which are merely given for the purpose of information.

24-05-2016

| Patent document cited in search report | Publication date | Patent family member(s) | Publication date |
|---|---|---|---|
| WO 2013153070 A1 | 17-10-2013 | CN 104254599 A | 31-12-2014 |
| | | EA 201491848 A1 | 30-01-2015 |
| | | EP 2836588 A1 | 18-02-2015 |
| | | HK 1206390 A1 | 08-01-2016 |
| | | JP 2015519042 A | 09-07-2015 |
| | | KR 20140148480 A | 31-12-2014 |
| | | US 2015064152 A1 | 05-03-2015 |
| | | WO 2013153070 A1 | 17-10-2013 |
| WO 2015095462 A1 | 25-06-2015 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2006263415 A1
- US 2005020490 A1
- US 2012121755 A1
- WO 2011143380 A1